# NEUE EUROPÄISCHE PATENTSCHRIFT

(11) **EP 1 812 620 B2**
(45) Veröffentlichungstag und Bekanntmachung des Hinweises auf die Entscheidung über den Einspruch: **07.04.2021**
(45) Hinweis auf die Patenterteilung: 07.09.2011
(21) Anmeldenummer: 05807819.7
(22) Anmeldetag: 09.11.2005
(51) Int. Cl.: C23C 22/34, C23C 22/36, C23C 22/68, C23C 22/00, C23C 22/83, C09D 5/12, C09D 5/08, C09D 183/04, C23C 18/12, C23C 18/14

(54) **VERFAHREN ZUR BESCHICHTUNG VON METALLISCHEN OBERFLÄCHEN MIT EINER WÄSSRIGEN SILAN/SILANOL/SILOXAN/POLYSILOXAN ENTHALTENDEN ZUSAMMENSETZUNG UND DIESE ZUSAMMENSETZUNG**
METHOD OF COATING METALLIC SURFACES WITH AN AQUEOUS COMPOSITION COMPRISING SILANES, SILANOLS, SILOXANES AND POLYSILOXANES AND COMPOSITION THEREOF
PROCEDE DE REVÊTEMENT DES SURFACES MÉTALLIQUES AVEC UNE COMPOSITION AQUEUSE COMPRENANT DES SILANES, SILANOLS, SILOXANES ET POLYSILOXANES ET CETTE COMPOSITION

(30) Priorität: 10.11.2004 US 985652; 04.04.2005 DE 102005015573; 04.04.2005 DE 102005015576; 04.04.2005 DE 102005015575
(43) Veröffentlichungstag der Anmeldung: 01.08.2007
(73) Patentinhaber: Chemetall GmbH, 60487 Frankfurt am Main (DE)
(72) Erfinder: KOLBERG, Thomas, 64646 Heppenheim (DE); WALTER, Manfred, 63589 Linsengericht (DE); SCHUBACH, Peter, 61130 Nidderau (DE)
(74) Vertreter: BASF IP Association
(86) Internationale Anmeldenummer: PCT/EP2005/011954
(87) Internationale Veröffentlichungsnummer: WO 2006/050917

(56) Entgegenhaltungen:
- EP-A- 1 433 878
- WO-A-02/24344
- GB-A- 1 528 715

## Beschreibung

Die Erfindung betrifft ein Verfahren zur Beschichtung von metallischen Oberflächen mit einer wässerigen Zusammensetzung, die mindestens ein Silan oder/und eine hierzu verwandte Verbindung und mindestens zwei weitere Komponenten enthält.

Die bislang am häufigsten eingesetzten Verfahren zur Behandlung von metallischen Oberflächen, insbesondere von Teilen, Band (Coil) oder Bandabschnitten aus mindestens einem metallischen Werkstoff, bzw. zur Vorbehandlung von metallischen Oberflächen vor der Lackierung von metallischen Oberflächen basieren vielfach einerseits auf dem Einsatz von Chrom(VI)-Verbindungen gegebenenfalls zusammen mit diversen Zusatzstoffen oder andererseits auf Phosphaten wie z.B. ZinkManganNickel-Phosphaten gegebenenfalls zusammen mit diversen Zusatzstoffen.

Aufgrund der toxikologischen und ökologischen Risiken, die insbesondere Chromat-haltige Verfahren oder Nickel-haltige Verfahren mit sich bringen, wird schon seit vielen Jahren nach Alternativen zu diesen Verfahren auf allen Gebieten der Oberflächentechnik für metallische Substrate gesucht, aber trotzdem immer wieder gefunden, dass bei vielen Anwendungen völlig Chromat-freie oder Nickel-freie Verfahren nicht 100 % des Leistungsspektrums erfüllen oder nicht mit der gewünschten Sicherheit erfüllen. Es wird dann versucht, die Chromatgehalte bzw. Nickelgehalte möglichst gering zu halten und so weit als möglich Cr⁶⁺ durch Cr³⁺ zu ersetzen. Es sind insbesondere in der Automobilindustrie z.B. für die Vorbehandlung von Karosserien vor der Lackierung hochwertige Phosphatierungen im Einsatz, die den Korrosionsschutz der Automobile auf einem hohen Qualitätsstand gehalten haben. Hierzu werden üblicherweise ZinkManganNickel-Phosphatierungen eingesetzt. Trotz vieler Jahre an Forschung und Entwicklung ist es nicht gelungen, für Multimetall-Anwendungen wie oft bei Karosserien, wo in Europa typischerweise im gleichen Bad metallische Oberflächen von Stahl, von verzinktem Stahl und Aluminium bzw. Aluminiumlegierungen vorbehandelt werden, ohne deutliche Qualitätseinschränkungen Nickel-frei zu phosphatieren. Da jetzt aber Nickel-Gehalte, selbst wenn sie vergleichsweise gering sind, in absehbarer Zeit toxikologisch bedenklicher eingestuft werden, stellt sich die Frage, ob mit anderen chemischen Verfahren ein gleichwertiger Korrosionsschutz erzielt werden kann.

Der Einsatz z.B. von Silanen/Silanolen in wässerigen Zusammensetzungen zur Herstellung von Siloxan/Polysiloxan-reichen korrosionsschützenden Beschichtungen ist grundsätzlich bekannt. Der Einfachheit halber wird bei Silan/Silanol/Siloxan/Polysiloxan im folgenden oft nur von Silan gesprochen. Diese Beschichtungen haben sich bewährt, jedoch sind die Verfahren zur Beschichtung mit einer vorwiegend Silan neben Lösemittel(n) enthaltenden wässerigen Zusammensetzung teilweise schwierig anzuwenden. Nicht immer werden diese Beschichtungen mit hervorragenden Eigenschaften ausgebildet. Außerdem kann es hierbei Probleme geben, die sehr dünnen transparenten Silan-Beschichtungen auf dem metallischen Untergrund sowie deren Fehlstellen mit bloßem Auge oder mit optischen Hilfsmitteln ausreichend charakterisieren zu können. Der Korrosionsschutz und die Lackhaftung der gebildeten Siloxan- oder/und Polysiloxan-reichen Beschichtungen sind oft, aber nicht immer hoch und teilweise auch bei geeigneter Applikation für bestimmte Anwendungen nicht ausreichend hoch. Es bedarf weiterer Verfahren unter Einsatz von mindestens einem Silan, die eine hohe Verfahrenssicherheit und eine hohe Qualität der hiermit hergestellten Beschichtungen insbesondere bezüglich Korrosionsbeständigkeit und Lackhaftung aufweisen.

Bei der Gestaltung Silan-haltiger wässeriger Zusammensetzungen hat sich außerdem eine kleine bzw. große Zugabemenge an mindestens einer Komponente ausgewählt aus der Gruppe von organischen Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% aller Feststoffgehalte - und wirken dann als "coupling agent", wobei die haftvermittelnde Wirkung insbesondere zwischen metallischem Substrat und Lack und ggf. zwischen Pigment und organischen Lackbestandteilen vorherrschen sollte, aber untergeordnet teilweise auch eine geringe vernetzende Wirkung auftreten kann. Vorwiegend werden sehr geringe Silan-Zusätze zu thermisch härtbaren Harzsystemen zugegeben.

Die zwei weiteren Patentanmeldungen, die am gleichen Tag beim gleichen Patentamt zu einem ähnlichen Erfindungsgegenstand eingereicht sind, werden hiermit ausdrücklich einbezogen, insbesondere bezüglich der wässerigen Zusammensetzungen, der Zusätze zu den wässerigen Zusammensetzungen, der Schritte vor, beim und nach dem Beschichten, dem Badverhalten, der Schichtausbildung, der Schichteigenschaften und den ermittelten Wirkungen, vor allem bei den Ausführungsbeispielen und Vergleichsbeispielen. In gleicher Weise werden auch die die Priorität begründenden Anmeldungen in die Nachanmeldungen ausdrücklich einbezogen.

Aus EP 1 017 880 B1 ist bekannt, eine wässerige Zusammensetzung mit einem teilweise hydrolysierten Aminosilan und mit einer Fluor enthaltenden Säure im Mischungsverhältnis 1 : 2 bis 2 : 1 einzusetzen. Diese Säure ist vorzugsweise Fluortitansäure. Die damit hergestellten Beschichtungen sind gut, erfüllen aber nicht die Voraussetzungen für hochwertige korrosionsbeständige Beschichtungen wie bei den außerordentlich hochwertigen Phosphatbeschichtungen im Automobilbau auf Basis von ZinkManganNickel-Phosphat, insbesondere für Multimetall-Anwendungen. Die Publikation gibt keinen Hinweis, dass eine Kombination von mehreren Säuren vorteilhaft sein kann.

GB 1528715 A1 lehrt Beschichtungszusammensetzungen auf Basis von (i) Polyvinylbutyralharz, (ii) organofunktionellem Silan, (iii) Borverbindung oder Polyphosphat und (iv) Phosphorsäure. EP 1 433 878 A1 beschreibt Zusammensetzungen zur chemischen Konversionsbeschichtung auf Basis von Zirkonium/Titan/Hafnium, Fluor und einer wasserlöslichen Epoxy-Verbindung, die eine Isocyanat- oder/und Melamingruppe enthält.

Es bestand daher die Aufgabe, wässerige Zusammensetzungen vorzuschlagen, deren Beschichtungen eine umweltfreundliche chemische Zusammensetzung aufweisen und eine hohe Korrosionsbeständigkeit gewährleisten, die auch in Multimetallanwendungen, in denen z.B. Stahl und Zink-reiche metallische Oberflächen und gegebenenfalls auch Aluminiumreiche metallische Oberflächen im gleichen Bad behandelt oder vorbehandelt werden, geeignet sind. Außerdem bestand die Aufgabe, wässerige Zusammensetzungen vorzuschlagen, die sich zur Beschichtung von Karosserien im Automobilbau eignen.

Es wurde jetzt gefunden, dass eine Kombination von mindestens zwei Komplexfluoriden, insbesondere von Fluortitansäure und von Fluorzirkoniumsäure, eine außerordentliche Qualitätssteigerung der Beschichtung ermöglicht.

Es wurde jetzt gefunden, dass es nicht nur möglich ist, frisch applizierte und noch nicht durchgetrocknete und daher noch nicht stärker kondensierte Beschichtungen auf Basis von Silan zu spülen, sondern dass dieses Verfahrensabfolge sogar vorteilhaft ist, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen. Dies widerspricht früheren Erfahrungen, nach denen ein Spülen einer frisch applizierten und noch nicht stärker getrockneten Beschichtung auf Basis von Silan leicht und oft zu einer Beeinträchtigung der Schichtqualität, wenn nicht sogar zum teilweisen oder vereinzelt zum vollständigen Entfernen der Beschichtung führt.

Es wurde jetzt auch gefunden, dass es möglich und vorteilhaft ist, auf frisch applizierte und noch nicht durchgetrocknete und daher noch nicht stärker kondensierte Beschichtungen auf Basis von Silan, die gegebenenfalls auch in diesem Zustand gespült wurden, einen Lack, eine lackähnliche Beschichtung, einen Primer oder einen Klebstoff zu applizieren. Die Applikation derartiger Zusammensetzungen auf Silan-basierte Nassfilme ist vorteilhaft, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen.

Die Aufgabe wird gelöst mit einem Verfahren zur Beschichtung von metallischen Oberflächen mit einer Silan/Silanol/Siloxan/Polysiloxan enthaltenden wässerigen Zusammensetzung, wobei die Zusammensetzung, die einen pH-Wert im Bereich von 3 bis 6 aufweist, besteht aus
a) mindestens einer Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 1 g/L enthält, berechnet auf der Basis der entsprechenden Silanole,
b) mindestens zwei Verbindungen b) ausgewählt aus Titan-, Hafnium-, Zirkonium-, Aluminium- oder/und Bor-haltigen Verbindungen, wobei die Zusammensetzung einen Gehalt an Verbindungen b) im Bereich von 0,1 bis 15 g/L aufweist, berechnet als Summe der entsprechenden Metalle, wobei die Zusammensetzung mindestens zwei Komplexfluoride ausgewählt aus Komplexfluoriden von Aluminium, Bor, Titan, Hafnium und Zirkonium enthält,
c) aus mindestens einer Art Kationen ausgewählt aus Kationen von Cer, Chrom, Eisen, Kalzium, Kobalt, Kupfer, Mangan, Molybdän, Nickel, Niob, Tantal, Yttrium, Zinn und weiteren Lanthaniden oder/und aus mindestens einer entsprechenden Verbindung, wobei die Zusammensetzung einen Gehalt an Kationen oder/und entsprechenden Verbindungen c) im Bereich von 0,01 bis 6 g/L aufweist, und
f) aus Wasser sowie gegebenenfalls
d) aus mindestens einer organischen Verbindung ausgewählt aus Monomeren, Oligomeren, Polymeren, Copolymeren und Blockcopolymeren, wobei das gewichtsbezogene Verhältnis von Verbindungen a) auf Basis von Silan/Silanol/ Siloxan/Polysiloxan berechnet auf Basis der entsprechenden Silanole zu organischen Verbindungen d) berechnet als Feststoffzusatz in der Zusammensetzung im Bereich von 1 : 0,05 bis 1 : 12 liegt, soweit organische Verbindungen d) zugesetzt sind,
e) aus mindestens einer den pH-Wert beeinflussenden Substanz,
g) aus mindestens einem organischen Lösemittel und/oder
h) bis zu 15 Gew.-% des Gehaltes an Feststoffen und Wirkstoffen der Substanzen a) bis d) und f) aus weiteren Substanzen, bei denen es sich nicht um Verbindungen ausgewählt aus Silanen, Silanolen, Siloxanen und Polysiloxanen, nicht um Verbindungen ausgewählt aus Titan-, Hafnium-, Zirkonium-, Aluminium- oder/und Bor-haltigen Verbindungen, nicht um Kationen ausgewählt aus Kationen von Metallen der 1. bis 3. und 5. bis 8. Nebengruppe einschließlich Lanthaniden sowie der 2. Hauptgruppe des Periodensystems der Elemente oder/und entsprechende Verbindungen, nicht um Wasser, nicht um organische Verbindungen ausgewählt aus Monomeren, Oligomeren, Polymeren, Copolymeren und Blockcopolymeren, nicht um pH-Wert beeinflussende Substanzen und nicht um organische Lösemittel handelt,
und wobei im gleichen Bad ein Mix aus verschiedenen metallischen Werkstoffen beschichtet wird.

Der Inhalt der Priorität-begründenden Anmeldung zu der vorliegenden Anmeldung, DE 102005015575.8, sowie der Inhalt der weiteren, verwandten Priorität-begründenden Anmeldungen DE 102005015573.1, DE 102005015576.6 und US SN 10/985,652 sowie der Inhalt der parallelen PCT-Anmeldungen, die aus den zuletzt genannten drei Priorität-begründenden Anmeldungen hervorgehen, soll ausdrücklich in diese Anmeldung einbezogen werden, insbesondere bezüglich der dort genannten unterschiedlichen Zusammensetzungen, unterschiedlichen zugesetzten Verbindungen, unterschiedlichen Verfahrensschritte, unterschiedlichen erzeugten Beschichtungen, Beispiele, Vergleichsbeispiele sowie der Effekte, Eigenschaften und Laborergebnisse.

Der Begriff "Silan" wird hierbei für Silane, Silanole, Siloxane, Polysiloxane und deren Reaktionsprodukte bzw. Derivate benutzt, die dabei auch oft "Silan"-Gemische sind. Der Begriff "Kondensieren" im Sinne dieser Anmeldung bezeichnet alle Formen der Vernetzung, der Weitervernetzung und der weiteren chemischen Reaktionen der Silane/Silanole/Siloxane/Polysiloxane. Der Begriff "Beschichtung" im Sinne dieser Anmeldung bezieht sich auf die mit der wässerigen Zusammensetzung ausgebildete Beschichtung einschließlich des Nassfilms, des angetrockneten Films, des durchgetrockneten Films, des bei erhöhter Temperatur getrockneten Films und des gegebenenfalls thermisch oder/und durch Bestrahlung weiter vernetzten Films.

Die wässerige Zusammensetzung kann gegebenenfalls h) bis zu 15 Gew.-% des Gehalts an Feststoffen und Wirkstoffen der Substanzen a) bis d) und f) weitere Substanzen umfassen kann, die die verschiedensten Eigenschaften der wässerigen Zusammensetzung oder/und der Beschichtung zu verbessern oder/und an Anforderungen anzupassen helfen können. Zu diesen Substanzen können insbesondere Additive wie z.B. Biozid(e) oder/und Entschäumer oder/und mindestens eine Substanz ausgewählt aus Silicium-freien Verbindungen mit jeweils mindestens einer Amino-, Harnstoff- oder/und Ureido-Gruppe, Hydroxid(en), Carboxylat(en), Nitrat(en) und Phosphor- und Sauerstoff-haltigen Verbindungen wie z.B. Phosphat(en) gehören. Bevorzugt umfasst dieser Begriff unter den bis zu 15 Gew.-% des Gehalts an Feststoffen und Wirkstoffen der Substanzen a) bis d) und f) weitere Substanzen, die im wesentlichen nur Hydroxyd(e), Acetat(e) und Nitrat(e) sind. Besonders bevorzugt liegt der Gehalt der weiteren Substanzen bei bis zu 12, bis zu 10, bis zu 8, bis zu 6, bis zu 4 oder bis zu 2 Gew.-% des Gehalts an Feststoffen und Wirkstoffen der Substanzen a) bis d) und f).

Die wässerige Zusammensetzung ist eine wässerige Lösung, eine wässerige Dispersion oder/und eine Emulsion.

Besonders bevorzugt wird der wässerigen Zusammensetzung mindestens ein Silan oder/und mindestens eine entsprechende Verbindung mit mindestens einer Aminogruppe, mit mindestens einer Harnstoffgruppe oder/und mit mindestens einer Ureidogruppe (Iminogruppe) zugesetzt, da die hiermit hergestellten Beschichtungen oft eine höhere Lackhaftung oder/und eine höhere Affinität zur nachfolgenden Lackschicht zeigen. Insbesondere bei Verwendung von mindestens einem Silan oder/und mindestens einer entsprechenden Verbindung mit mindestens einer derartigen Gruppe ist darauf zu achten, dass die Kondensation bei pH-Werten unter 2 gegebenenfalls sehr schnell verläuft. Vorzugsweise kann der Anteil an Aminosilanen, Ureidosilanen oder/und Silanen mit mindestens einer Ureidogruppe oder/und an entsprechenden Silanolen, Siloxanen und Polysiloxanen an der Summe an allen Arten an Verbindungen ausgewählt aus Silanen, Silanolen, Siloxanen und Polysiloxanen erhöht sein, besonders bevorzugt über 20, über 30 oder über 40 Gew.-% liegen berechnet als die entsprechenden Silanole, ganz besonders bevorzugt über 50, über 60, über 70 oder über 80 Gew.-% liegen und gegebenenfalls sogar bis zu 90, bis zu 95 oder bis zu 100 Gew.-% betragen.

Vorzugsweise weist die wässerige Zusammensetzung einen Gehalt an Silan/Silanol/Siloxan/Polysiloxan a) im Bereich von 0,05 bis 1 g/L auf, berechnet auf Basis der entsprechenden Silanole. Besonders bevorzugt liegt dieser Gehalt im Bereich von 0,08 bis 1 g/L. Diese Gehaltsbereiche beziehen sich insbesondere auf Badzusammensetzungen.

Wenn jedoch ein Konzentrat eingesetzt wird, um eine entsprechende Badzusammensetzung herzustellen, insbesondere durch Verdünnen mit Wasser und gegebenenfalls durch Zusatz von mindestens einer weiteren Substanz, empfiehlt es sich, beispielsweise ein Konzentrat A mit einem Gehalt an Silan/Silanol/Siloxan/Polysiloxan a) getrennt von einem Konzentrat B mit einem Gehalt an allen oder fast allen übrigen Bestandteilen zu halten und diese Komponenten erst im Bad zusammenzuführen. Hierbei kann gegebenenfalls auch jeweils mindestens ein Silan, Silanol, Siloxan oder/und Polysiloxan auch teilweise oder gänzlich im festen Zustand vorliegen, im festen Zustand zugegeben werden oder/und als Dispersion oder Lösung zugesetzt werden. Der Gehalt an Silan/Silanol/Siloxan/Polysiloxan a) im Konzentrat A liegt vorzugsweise im Bereich von 0,01 bis 1000 g/L, berechnet auf Basis der entsprechenden Silanole. Besonders bevorzugt liegt er im Bereich von 0,02 bis 200 g/L, ganz besonders bevorzugt im Bereich von 0,05 bis 120 g/L, insbesondere im Bereich von 0,1 bis 60 g/L. Die Konzentrationsbereiche des Konzentrats A bzw. des Bades können jedoch je nach Applikation unterschiedliche Gehaltsschwerpunkte aufweisen.

Besonders bevorzugt enthält die Zusammensetzung einen Gehalt an jeweils mindestens einem Silan, Silanol, Siloxan oder/und Polysiloxan a) mit jeweils mindestens einer Gruppe ausgewählt aus Acrylatgruppen, Alkylaminoalkylgruppen, Alkylaminogruppen, Aminogruppen, Aminoalkylgruppen, Bernsteinsäureanhydridgruppen, Carboxylgruppen, Epoxygruppen, Glycidoxygruppen, Hydroxygruppen, Harnstoffgruppen, Isocyanatogruppen, Methacrylatgruppen oder/und Ureidogruppen (Iminogruppen).

Die Silane, Silanole, Siloxane oder/und Polysiloxane in der wässerigen Zusammensetzung oder zumindest ihre der wässerigen Zusammensetzung zugesetzten Verbindungen sind oder zumindest ein Teil von ihnen ist vorzugsweise wasserlöslich. Die Silane im Sinne dieser Anmeldung werden als wasserlöslich angesehen, wenn sie summarisch bei Raumtemperatur in der Silan/Silanol/Siloxan/Polysiloxan enthaltenden Zusammensetzung eine Löslichkeit in Wasser von mindestens 0,05 g/L, vorzugsweise von mindestens 0,1 g/L, besonders bevorzugt von mindestens 0,2 g/L oder von mindestens 0,3 g/L aufweisen. Das bedingt nicht, dass jedes einzelne dieser Silane diese Mindestlöslichkeit aufweisen muss, sondern dass diese Mindestwerte durchschnittlich erzielt werden.

Vorzugsweise ist in der wässerigen Zusammensetzung mindestens ein Silan/Silanol/Siloxan/Polysiloxan enthalten ausgewählt aus Fluor-freien Silanen und den entsprechenden Silanolen/Siloxanen/Polysiloxanen aus jeweils mindestens einem Acyloxysilan, einem Alkoxysilan, einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane. Sie enthält mindestens ein Silan oder/und (jeweils) mindestens ein monomeres, dimeres, oligomeres oder/und polymeres Silanol oder/und (jeweils) mindestens ein monomeres, dimeres, oligomeres oder/und polymeres Siloxan, wobei im folgenden hierbei Oligomere auch schon Dimere und Trimere umfassen sollen. Besonders bevorzugt hat das mindestens eine Silan bzw. das entsprechende Silanol/Siloxan/Polysiloxan jeweils mindestens eine Amino-Gruppe, Harnstoff-Gruppe oder/und Ureido-Gruppe.

Insbesondere ist hierin mindestens ein Silan oder/und mindestens ein entsprechendes Silanol/Siloxan/Polysiloxan enthalten ausgewählt aus der Gruppe von oder auf Basis von
(3,4-Epoxyalkyl)trialkoxysilan,
(3,4-Epoxycycloalkyl)alkyltrialkoxysilan,
3-Acryloxyalkyltrialkoxysilan,
3-Glycidoxyalkyltrialkoxysilan,
3-Methacryloxyalkyltrialkoxysilan,
3-(Trialkoxysilyl)alkylbernsteinsäuresilan,
4-Amino-dialkylalkyltrialkoxysilan,
4-Amino-dialkylalkylalkyldialkoxysilan,
Aminoalkylaminoalkyltrialkoxysilan,
Aminoalkylaminoalkylalkyldialkoxysilan,
Aminoalkyltrialkoxysilan,
Bis-(trialkoxysilylalkyl)amin,
Bis-(trialkoxysilyl)ethan,
Gamma-Acryloxyalkyltrialkoxysilan,
Gamma-Aminoalkyltrialkoxysilan,
Gamma-Methacryloxyalkyltrialkoxysilan,
(Gamma-Trialkoxysilylalkyl)dialkylentriamin,
Gamma-Ureidoalkyltrialkoxysilan,
N-2-Aminoalkyl-3-aminoproplyltrialkoxysilan,
N-(3-trialkoxysilylalkyl)alkylendiamin,
N-Alkylaminoisoalkyltrialkoxysilan,
N-(Aminoalkyl)aminoalkylalkyldialkoxysilan,
N-beta-(aminoalkyl)-gamma-aminoalkyltrialkoxysilan,
N-(gamma-trialkoxysilylalkyl)dialkylentriamin,
N-Phenyl-aminoalkyltrialkoxysilan,
Poly(aminoalkyl)alkyldialkoxysilan,
Tris(3-trialkoxysilyl)alkylisocyanurat,
Ureidoalkyltrialkoxysilan und
Vinylacetoxysilan.

Besonders bevorzugt ist hierin mindestens ein Silan oder/und mindestens ein entsprechendes Silanol/Siloxan/Polysiloxan enthalten ausgewählt aus der Gruppe von oder auf Basis von
(3,4-Epoxybutyl)triethoxysilan,
(3,4-Epoxybutyl)trimethoxysilan,
(3,4-Epoxycyclohexyl)propyltriethoxysilan,
(3,4-Epoxycyclohexyl)propyltrimethoxysilan,
3-Acryloxypropyltriethoxysilan,
3-Acryloxypropyltrimethoxysilan,
3-Aminopropylsilanetriol,
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Aminopropyltrialkoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Bis-1,2-(triethoxysilyl)ethan,
Bis-1,2-(trimethoxysilyl)ethan,
Bis(triethoxysilylpropyl)amin,
Bis(trimethoxysilylpropyl)amin,
Gamma-(3,4-Epoxycyclohexyl)propyltriethoxysilan,
Gamma-(3,4-Epoxycyclohexyl)propyltrimethoxysilan,
Gamma-Acryloxypropyltriethoxysilan,
Gamma-Acryloxypropyltrimethoxysilan,
Gamma-Aminopropyltriethoxysilan,
Gamma-Aminopropyltrimethoxysilan,
Gamma-Methacryloxypropyltriethoxysilan,
Gamma-Methacryloxypropyltrimethoxysilan,
Gamma-Ureidopropyltrialkoxysilan,
N-2-Aminoethyl-3-aminoproplyltriethoxysilan,
N-2-Aminoethyl-3-aminoproplyltrimethoxysilan,
N-2-Aminomethyl-3-aminoproplyltriethoxysilan,
N-2-Aminomethyl-3-aminoproplyltrimethoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat,
Tris(3-(trimethoxysilyl)propyl)isocyanurat,
Ureidopropyltrialkoxysilan und
Vinyltriacetoxysilan.

Gegebenenfalls ist in einzelnen Ausführungsvarianten in der wässerigen Zusammensetzung mindestens ein Silan/Silanol/Siloxan/Polysiloxan enthalten mit einer Fluor-haltigen Gruppe. Je nach Auswahl der SilanVerbindung(en) kann auch die Hydrophilie/Hydrophobie zielstrebig eingestellt werden.

Vorzugsweise wird in manchen Ausführungsformen der wässerigen Zusammensetzung mindestens ein zumindest teilweise hydrolysiertes oder/und ein zumindest teilweise kondensiertes Silan/Silanol/Siloxan/Polysiloxan zugesetzt. Insbesondere beim Zusammenmischen der wässerigen Zusammensetzung kann gegebenenfalls jeweils mindestens ein bereits vorhydrolysiertes, vorkondensiertes Silan/Silanol/Siloxan/Polysiloxan zugesetzt werden. Ein derartiger Zusatz ist besonders bevorzugt.

In manchen Ausführungsformen kann der wässerigen Zusammensetzung mindestens ein zumindest weitgehend oder/und vollständig hydrolysiertes oder/und ein zumindest weitgehend oder/und vollständig kondensiertes Silan/Silanol/Siloxan/Polysiloxan zugesetzt werden. Ein nicht hydrolysiertes Silan bindet in vielen Ausführungsvarianten schlechter an die metallische Oberfläche an als ein zumindest teilweise hydrolysiertes Silan/Silanol. Ein weitgehend hydrolysiertes und nicht oder nur wenig kondensiertes Silan/Silanol/Siloxan bindet in vielen Ausführungsvarianten deutlich besser an die metallische Oberfläche an als ein zumindest teilweise hydrolysiertes und weitgehend kondensiertes Silan/Silanol/Siloxan/Polysiloxan. Ein vollständig hydrolysiertes und weitgehend kondensiertes Silanol/Siloxan/Polysiloxan zeigt in vielen Ausführungsvarianten nur noch eine geringe Neigung an die metallische Oberfläche chemisch angebunden zu werden.

In manchen Ausführungsformen kann der wässerigen Zusammensetzung zusätzlich oder/und alternativ zu Silan(en)/Silanol(en) mindestens ein Siloxan oder/und Polysiloxan zugesetzt werden, das keinen oder nur einen geringen Gehalt - z.B. weniger als 20 oder weniger als 40 Gew.-% der Summe an Silan/Silanol/Siloxan/Polysiloxan - an Silanen/Silanolen aufweist. Das Siloxan bzw. Polysiloxan ist vorzugsweise kurzkettig und wird vorzugsweise durch Rollcoater-Behandlung aufgetragen. Dann wirkt sich das auf die Beschichtung gegebenenfalls durch stärkere Hydrophobie und höheren Blankkorrosionsschutz aus.

Die wässerige Zusammensetzung weist mindestens zwei oder sogar mindestens drei Verbindungen von Titan, Hafnium, Zirkonium, Aluminium und Bor auf. Hierbei können sich diese Verbindungen in ihren Kationen oder/und in ihren Anionen unterscheiden. Die wässerige Zusammensetzung, insbesondere die Badzusammensetzung, weist zudem einen Gehalt an mindestens zwei Komplexfluoriden ausgewählt aus Komplexfluoriden von Titan, Hafnium, Zirkonium, Aluminium und Bor auf. Vorzugsweise liegt ihr Unterschied nicht nur in der Art des Komplexes. Vorzugsweise weist die wässerige Zusammensetzung, insbesondere die Badzusammensetzung, einen Gehalt an Verbindungen b) ausgewählt aus Verbindungen von Titan, Hafnium, Zirkonium, Aluminium und Bor auf im Bereich von 0,3 bis 15 g/L berechnet als Summe der entsprechenden Metalle. Besonders bevorzugt liegt dieser Gehalt im Bereich von 0,5 bis 5 g/L. Dagegen kann der Gehalt an Verbindungen von Titan, Hafnium, Zirkonium, Aluminium und Bor im Konzentrat, beispielsweise im Silan/Silanol/Siloxan/Polysiloxan-freien Konzentrat B, vorzugsweise im Bereich von 1 bis 300 g/L liegen berechnet als Summe der entsprechenden Metalle. Besonders bevorzugt liegt er im Bereich von 2 bis 250 g/L, ganz besonders bevorzugt im Bereich von 3 bis 200 g/L, insbesondere im Bereich von 5 bis 150 g/L. Es ist bevorzugt, dass sie kein Aluminiumphosphat, kein Titansulfat, kein Zirkoniumnitrat oder/und kein Zirkoniumchlorid enthält.

Die Zusammensetzung enthält mindestens zwei Komplexfluoride, wobei der Gehalt an Komplexfluorid(en) insbesondere im Bereich von 0,01 bis 10 g/L liegt berechnet als Summe der entsprechenden Metallkomplexfluoride als MeF₆. Bevorzugt liegt dieser Gehalt im Bereich von 0,03 bis 10 g/L, besonders bevorzugt im Bereich von 0,06 bis 10 g/L, ganz besonders bevorzugt im Bereich von 1 bis 10 g/L. Das Komplexfluorid kann insbesondere als MeF₄ oder/und als MeF₆, jedoch auch in anderen Stufen bzw. Zwischenstufen vorliegen. Vorteilhafterweise liegt in vielen Ausführungsvarianten gleichzeitig mindestens ein Titan- und mindestens ein Zirkoniumkomplexfluorid vor. Hierbei kann es in vielen Fällen vorteilhaft sein, gleichzeitig mindestens einen MeF₄- und mindestens einen MeF₆-Komplex in der Zusammensetzung vorliegen zu haben, insbesondere gleichzeitig einen TiF₆- und einen ZrF₄-Komplex. Hierbei kann es vorteilhaft sein, diese Komplexfluorid-Verhältnisse bereits im Konzentrat einzustellen und auf diesem Wege in das Bad zu übernehmen. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 500 g/L liegen berechnet als Summe MeF₆. Besonders bevorzugt liegt er im Bereich von 0,05 bis 300 g/L, ganz besonders bevorzugt im Bereich von 0,05 bis 150 g/L, insbesondere im Bereich von 0,05 bis 50 g/L.

Erstaunlicherweise beeinflussen sich die einzelnen Komplexfluoride bei ihrer Kombination nicht negativ, sondern zeigen einen unerwarteten positiven Verstärkungseffekt. Diese Zusätze auf Basis von Komplexfluorid wirken offenbar in ähnlicher oder gleicher Weise. Wenn eine Kombination von Komplexfluoriden auf Basis von Titan und Zirkonium und nicht nur ein Komplexfluorid nur auf Basis von Titan oder nur eines auf Basis von Zirkonium eingesetzt wird, ergaben sich überraschenderweise immer merklich bessere Ergebnisse als bei einem einzelnen dieser Zusätze. Auf der Oberfläche scheidet sich ein Komplexfluorid auf Basis von Titan bzw. von Zirkonium vermutlich als Oxid oder/und Hydroxid ab.

Es wurde jetzt überraschend festgestellt, dass eine gute Multimetall-Behandlung mit einer einzigen wässerigen Zusammensetzung erst möglich ist, wenn ein Komplexfluorid eingesetzt wurde, und dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Zusätzlich hierzu kann auch eine andersartige Verbindung von Titan, Hafnium, Zirkonium, Aluminium oder/und Bor zugesetzt werden, beispielsweise mindestens ein Hydroxycarbonat oder/und mindestens eine andere wasserlösliche oder schwach wasserlösliche Verbindung wie z.B. mindestens ein Nitrat oder/und mindestens ein Carboxylat.

Allerdings hat sich jetzt herausgestellt, dass sich ein Zusatz an Siliciumhexafluorid als einzigem einer wässerigen Zusammensetzung zugesetzten Komplexfluorid anders als die Zusätze an anderen Komplexfluoriden teilweise deutlich schlechter auswirkt.

Vorzugsweise werden als Kationen oder/und entsprechende Verbindungen c) nur Arten von Kationen bzw. entsprechende Verbindungen ausgewählt aus der Gruppe von Kalzium, Yttrium, Lanthan, Cer, Niob, Tantal, Molybdän, Mangan, Eisen, Kobalt, Nickel und Kupfer, besonders bevorzugt aus der Gruppe von
Kalzium, Yttrium, Lanthan, Cer, Molybdän, Mangan, Eisen, Kobalt und Kupfer, wenn von Spurengehalten abgesehen wird.

Andererseits hat sich überraschenderweise gezeigt, dass Kationen von Eisen und Zink und daher auch die Anwesenheit entsprechender Verbindungen im Bad, die gerade bei sauren Zusammensetzungen zum Herauslösen von derartigen Ionen aus der metallischen Oberfläche vermehrt beitragen können, sich in weiten Gehaltsbereichen nicht negativ auf das Badverhalten, die Schichtausbildung und die Schichteigenschaften auswirken.

Vorzugsweise weist die wässerige Zusammensetzung, insbesondere die Badzusammensetzung, einen Gehalt an Kationen oder/und entsprechenden Verbindungen c) im Bereich von 0,03 bis 6 g/L auf berechnet als Summe der Metalle. Besonders bevorzugt liegt er im Bereich von 0,06 bis 6 g/L, ganz besonders bevorzugt im Bereich von 0,1 bis 6 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 1 bis 240 g/L liegen berechnet als Summe der Metalle. Besonders bevorzugt liegt er im Bereich von 2 bis 180 g/L, ganz besonders bevorzugt im Bereich von 3 bis 140 g/L, insbesondere im Bereich von 5 bis 100 g/L.

Die Zusammensetzung enthält mindestens eine Art Kationen ausgewählt aus Kationen von Cer, Chrom, Eisen, Kalzium, Kobalt, Kupfer, Mangan, Molybdän, Nickel, Niob, Tantal, Yttrium, Zinn und weiteren Lanthaniden oder/und mindestens eine entsprechende Verbindung. Vorzugsweise sind nicht alle Kationen, die in der wässerigen Zusammensetzung enthalten sind, nicht nur durch die wässerige Zusammensetzung aus der metallischen Oberfläche herausgelöst, sondern auch zumindest teilweise oder sogar weitgehend der wässerigen Zusammensetzung zugesetzt worden. Daher kann ein frisch angesetztes Bad von bestimmten Kationen bzw. Verbindungen frei sein, die erst aus Reaktionen mit metallischen Werkstoffen bzw. aus Reaktionen im Bad freigesetzt werden bzw. entstehen.

Der Zusatz von Manganionen bzw. an mindestens einer Manganverbindung hat sich überraschend als besonders vorteilhaft herausgestellt. Obwohl offenbar keine oder fast keine Manganverbindung auf der metallischen Oberfläche abgeschieden wird, fördert dieser Zusatz offenbar die Abscheidung von Silan/Silanol/Siloxan/Polysiloxan und verbessert so die Eigenschaften der Beschichtung signifikant. Ein kombinierter Zusatz von Magnesium und Mangan führt teilweise zu noch weiter verbesserten Beschichtungen. Dagegen hat sich ein Zusatz von nur 0,02 g/L an Kupferionen noch nicht als von signifikantem Einfluss herausgestellt. Bei einem höheren Gehalt an Kalziumionen ist darauf zu achten, dass keine Destabilisierung eines Komplexfluorids durch Bildung von Calciumfluorid auftritt.

Die Erdalkalimetallionen bzw. entsprechende Verbindungen können helfen, die Abscheidung von Verbindungen auf Basis von Titan oder/und Zirkonium zu verstärken, was oft insbesondere für die Erhöhung der Korrosionsbeständigkeit von Vorteil ist. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 100 g/L liegen berechnet als Summe der entsprechenden Verbindungen, besonders bevorzugt im Bereich von 0,3 bis 80 g/L, ganz besonders bevorzugt im Bereich von 0,6 bis 60 g/L, insbesondere im Bereich von 0,5 bis 30 g/L.

Vorzugsweise enthält die Zusammensetzung einen Gehalt an mindestens einer Art Kationen ausgewählt aus Kationen von Eisen, Kobalt, Mangan, Nickel, Yttrium und Lanthaniden oder/und aus mindestens einer entsprechenden Verbindung c), insbesondere im Bereich von 0,03 bis 6 g/L berechnet als Summe der Metalle. Besonders bevorzugt liegt er im Bereich von 0,06 bis 6 g/L, ganz besonders bevorzugt im Bereich von 0,1 bis 6 g/L. Dagegen kann der Gehalt an diesen Verbindungen im Konzentrat, beispielsweise im Silan/Silanol/Siloxan/Polysiloxan-freien Konzentrat B, vorzugsweise im Bereich von 1 bis 240 g/L liegen berechnet als Summe der Metalle. Besonders bevorzugt liegt er im Bereich von 2 bis 180 g/L, ganz besonders bevorzugt im Bereich von 3 bis 140 g/L, insbesondere im Bereich von 5 bis 100 g/L.

Vorzugsweise enthält die Zusammensetzung einen Gehalt an mindestens einer organischen Verbindung d) ausgewählt aus Monomeren, Oligomeren, Polymeren, Copolymeren und Blockcopolymeren, insbesondere mindestens eine Verbindung auf Basis von Acryl, Epoxid oder/und Urethan. Hierbei kann zusätzlich oder alternativ auch mindestens eine organische Verbindung mit mindestens einer Silyl-Gruppe eingesetzt werden. In manchen Ausführungsformen ist es bevorzugt, solche organischen Verbindungen mit einem Gehalt oder mit einem höheren Gehalt an OH-Gruppen, an AminGruppen, an Carboxylat-Gruppen, an Isocyanat-Gruppen oder/und an Isocyanurat-Gruppen einzusetzen.

Vorzugsweise enthält die Zusammensetzung einen Gehalt an mindestens einer organischen Verbindung d) ausgewählt aus Monomeren, Oligomeren, Polymeren, Copolymeren und Blockcopolymeren im Bereich von 0,01 bis 200 g/L berechnet als Feststoffzusatz. Besonders bevorzugt liegt der Gehalt im Bereich von 0,03 bis 120 g/L, ganz besonders bevorzugt im Bereich von 0,06 bis 60 g/L, insbesondere im Bereich von 0,1 bis 20 g/L. Solche organischen Verbindungen können in manchen Ausführungsvarianten helfen, die Ausbildung der Beschichtung zu vergleichmäßigen. Diese Verbindungen können bei der Ausbildung einer kompakteren, dichteren, chemisch resistenteren oder/und wasserresistenteren Beschichtung im Vergleich zu Beschichtungen auf Basis Silan/Silanol/Siloxan/Polysiloxan usw. ohne diese Verbindungen beitragen. Je nach Auswahl der organischen Verbindung(en) kann auch die Hydrophilie/Hydrophobie zielstrebig eingestellt werden. Eine stark hydrophobe Beschichtung ist jedoch in einigen Anwendungen problematisch wegen der erforderlichen Anbindung von insbesondere wasserbasierten Lacken. Insbesondere bei Pulverlacken kann jedoch eine stärkere Hydrophobie eingestellt werden. Bei Verwendung eines Zusatzes von mindestens einer organischen Verbindung kann sich eine Kombination mit Verbindungen mit einer gewissen Funktionalität besonders vorteilhaft erweisen wie z.B. Verbindungen auf Basis von Aminen/Diaminen/Polyaminen/Harnstoff/Iminen/Diiminen/Polyiminen bzw. deren Derivaten, Verbindungen auf Basis von insbesondere verkappten Isocyanaten/Isocyanuraten/Melamin-Verbindungen, Verbindungen mit Carboxyl- oder/und Hydroxyl-Gruppen wie z.B. Carboxylate, längerkettige Zucker-artige Verbindungen wie z.B. (synthetische) Stärke, Cellulose, Saccharide, langkettige Alkohole oder/und deren Derivate. Unter den langkettigen Alkoholen werden insbesondere solche mit 4 bis 20 C-Atomen zugesetzt wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Propylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol.

Das gewichtsbezogene Verhältnis von Verbindungen auf Basis von Silan/Silanol/Siloxan/Polysiloxan berechnet auf Basis der entsprechenden Silanole zu Verbindungen auf Basis von organischen Polymeren berechnet als Feststoffzusatz in der Zusammensetzung liegt vorzugsweise im Bereich von 1 : 0,05 bis 1 : 3, besonders bevorzugt im Bereich von 1 : 0,1 bis 1 : 2, ganz besonders bevorzugt im Bereich von 1 : 0,2 bis 1: 1. Dieses Verhältnis liegt in manchen Ausführungsvarianten vorzugsweise im Bereich von 1 : 0,05 bis 1 : 30 , besonders bevorzugt im Bereich von 1 : 0,1 bis 1 : 2, ganz besonders bevorzugt im Bereich von 1 : 0,2 bis 1 : 20, insbesondere im Bereich von 1 : 0,25 bis 1 : 12, im Bereich von 1 : 0,3 bis 1 : 8 oder im Bereich von 1 : 0,35 bis 1 : 5.

Es wurde jetzt überraschend festgestellt, dass ein Zusatz insbesondere an organischem Polymer oder/und Copolymer die Korrosionsbeständigkeit insbesondere auf Eisen und Stahl deutlich verbessert und dabei für eine höhere Prozeßsicherheit und konstant gute Beschichtungseigenschaften von besonderem Vorteil ist.

Als Katalysator für die Hydrolyse eines Silans kann z.B. Essigsäure zugesetzt werden. Die Abstumpfung des pH-Wertes des Bades kann beispielsweise mit Ammoniak/Ammoniumhydroxid, einem Alkalihydroxid oder/und einer Verbindung auf Basis von Amin wie z.B. Monoethanolamin erfolgen, während der pH-Wert des Bades vorzugsweise mit Essigsäure, Hydroxyessigsäure oder/und Salpetersäure abgesenkt wird. Derartige Gehalte gehören zu den den pH-Wert beeinflussenden Substanzen.

Gegebenenfalls enthält die Zusammensetzung auch einen Gehalt an Nitrat. Vorzugsweise enthält sie einen Gehalt an Nitrat im Bereich von 0,01 bis 2 g/L berechnet als Summe der entsprechenden Verbindungen. Besonders bevorzugt liegt der Gehalt im Bereich von 0,03 bis 1,2 g/L, ganz besonders bevorzugt im Bereich von 0,06 bis 0,8 g/L, insbesondere im Bereich von 0,1 bis 0,5 g/L. Nitrat kann helfen, die Ausbildung der Beschichtung insbesondere auf Stahl zu vergleichmäßigen. Nitrat kann insbesondere zugegeben werden als Alkalimetallnitrat, Ammoniumnitrat, Schwermetallnitrat, als Salpetersäure oder/und als entsprechende organische Verbindung. Das Nitrat kann die Neigung zum Anrosten insbesondere bei Oberflächen von Stahl und Eisen deutlich vermindern. Das Nitrat kann gegebenenfalls beitragen zur Ausbildung einer fehlerfreien Beschichtung oder/und einer außergewöhnlich ebenen Beschichtung, die gegebenenfalls frei von optisch erkennbaren Markierungen ist.

Gegebenenfalls enthält die Zusammensetzung einen Gehalt an mindestens einer Art Kationen ausgewählt aus Alkalimetallionen, Ammoniumionen und entsprechenden Verbindungen, insbesondere an Kalium- oder/und Natriumionen bzw. an mindestens einer entsprechenden Verbindung.

Gegebenenfalls enthält die Zusammensetzung einen Gehalt an freiem Fluorid im Bereich von 0,001 bis 3 g/L, berechnet als F⁻. Bevorzugt liegt der Gehalt im Bereich von 0,01 bis 1 g/L, besonders bevorzugt im Bereich von 0,02 bis 0,5 g/L, ganz besonders bevorzugt im Bereich bis 0,1 g/L. Es wurde ermittelt, dass es in vielen Ausführungsvarianten vorteilhaft ist, einen geringen Gehalt an freiem Fluorid im Bad zu haben, weil das Bad dann in vielen Ausführungsformen stabilisiert werden kann. Ein zu hoher Gehalt an freiem Fluorid kann manchmal die Abscheidungsrate an Kationen negativ beeinflussen. Daneben kann in vielen Fällen auch nicht-dissoziiertes oder/und nicht komplex-gebundenes Fluorid insbesondere im Bereich von 0,001 bis 0,3 g/L auftreten. Dagegen kann der Gehalt an diesen Verbindungen im Konzentrat, beispielsweise im Silan/Silanol/Siloxan/Polysiloxan-freien Konzentrat B, vorzugsweise im Bereich von 0,05 bis 5 g/L liegen berechnet als Summe MeF₆. Besonders bevorzugt liegt er im Bereich von 0,02 bis 3 g/L, ganz besonders bevorzugt im Bereich von 0,01 bis 2 g/L, insbesondere im Bereich von 0,005 bis 1 g/L. Ein solcher Zusatz wird vorzugsweise in Form von Flußsäure oder/und deren Salzen zugesetzt.

Gegebenenfalls enthält die Zusammensetzung einen Gehalt an mindestens einer Fluorid-haltigen Verbindung oder/und Fluorid-Anionen, berechnet als F⁻ und ohne Einbeziehung von Komplexfluoriden, insbesondere mindestens ein Fluorid von Alkalifluorid(en), Ammoniumfluorid oder/und Flußsäure, besonders bevorzugt im Bereich von 0,001 bis 12 g/L, ganz besonders bevorzugt im Bereich von 0,005 bis 8 g/L, insbesondere im Bereich von 0,01 bis 3 g/L. Die Fluoridionen bzw. entsprechende Verbindungen können helfen, die Abscheidung der Metallionen auf der metallische Oberfläche zu kontrollieren bzw. zu steuern, so dass z.B. die Abscheidung der mindestens einen Zirkonium-Verbindung bei Bedarf verstärkt oder verringert werden kann. Dagegen kann der Gehalt an diesen Verbindungen im Konzentrat, beispielsweise im Silan/Silanol/Siloxan/Polysiloxan-freien Konzentrat B, vorzugsweise im Bereich von 0,1 bis 100 g/L liegen berechnet als Summe der entsprechenden Verbindungen. Besonders bevorzugt liegt er im Bereich von 0,3 bis 80 g/L, ganz besonders bevorzugt im Bereich von 0,6 bis 60 g/L, insbesondere im Bereich von 1 bis 30 g/L. Vorzugsweise ist das Gewichtsverhältnis der Summe der Komplexfluoride berechnet als Summe der zugehörigen Metalle zur Summe der freien Fluoride berechnet als F⁻ größer 1 : 1, besonders bevorzugt größer als 3 : 1, ganz besonders bevorzugt größer als 5 : 1, besonders bevorzugt größer als 10 : 1.

Die zuvor genannten Zusätze wirken in den wässerigen Zusammensetzungen in der Regel förderlich, indem sie die guten Eigenschaften der wässerigen Grundzusammensetzung aus den Komponenten a), b) und Lösemittel(n) noch weiter verbessern helfen. Diese Zusätze wirken in der Regel in gleicher Weise, wenn nur eine Titan- oder nur eine Zirkonium-Verbindung oder eine Kombination dieser eingesetzt wird. Es hat sich jedoch überraschend gezeigt, dass die Kombination von jeweils mindestens einer Titan- und von mindestens einer Zirkoniumverbindung, insbesondere als Komplexfluoride, die Eigenschaften vor allem der damit erzeugten Beschichtungen signifikant verbessert. Die verschiedenen Zusätze wirken damit erstaunlicherweise wie in einem Baukastensystem und tragen zur Optimierung der jeweiligen Beschichtung wesentlich bei. Gerade bei Verwendung eines sogenannten Multimetall-Mixes, wie er oft bei der Vorbehandlung von Karosserien und bei der Behandlung oder Vorbehandlung von verschiedenen Kleinteilen oder Montageteilen auftritt, hat sich die wässerige Zusammensetzung sehr bewährt, da die Zusammensetzung mit den verschiedenen Zusätzen auf den jeweiligen Multimetall-Mix und seine Besonderheiten und Anforderungen spezifisch optimiert werden kann.

Bei dem erfindungsgemäßen Verfahren wird mit der wässerigen Beschichtung im gleichen Bad ein Mix aus verschiedenen metallischen Werkstoffen beschichtet wie z.B. bei Karosserien oder bei unterschiedlichen Kleinteilen. Hierbei können beispielsweise Substrate mit metallischen Oberflächen ausgewählt aus Gusseisen, Stahl, Aluminium, Aluminiumlegierungen, Magnesiumlegierungen, Zink und Zinklegierungen in einem beliebigen Mix gleichzeitig oder/und nacheinander erfindungsgemäß beschichtet werden, wobei die Substrate zumindest teilweise metallisch beschichtet sein können oder/und zumindest teilweise aus mindestens einem metallischen Werkstoff bestehen können.

Soweit nicht mindestens eine weitere Komponente oder/und Spuren an weiteren Substanzen enthalten sind, besteht der Rest auf 1000 g/L aus Wasser oder aus Wasser und mindestens einem organischen Lösemittel wie z.B. Äthanol, Methanol, Isopropanol bzw. Dimethylformamid (DMF). Vorzugsweise ist der Gehalt an organischen Lösemitteln in den meisten Ausführungsformen besonders niedrig oder Null. Aufgrund der Hydrolyse des mindestens einen enthaltenen Silans kann ein Gehalt insbesondere an Äthanol oder/und Methanol auftreten. Besonders bevorzugt ist, kein organisches Lösemittel zuzusetzen.

Vorzugsweise ist die Zusammensetzung frei von oder im wesentlichen frei von allen Arten von Partikeln oder von Partikeln größer 0,02 µm mittlerem Durchmesser, die gegebenenfalls z.B. auf Basis von Oxiden wie z.B. SiO₂ zugesetzt werden könnten.

Vorzugsweise ist die Zusammensetzung arm an, im wesentlichen frei oder frei von höheren Gehalten oder Gehalten an Wasserhärtebildnern wie z.B. Kalziumgehalte über 1 g/L. Vorzugsweise ist die wässerige Zusammensetzung frei oder arm an Blei, Cadmium, Chromat, Kobalt, Nickel oder/und anderen giftigen Schwermetallen. Vorzugsweise werden solche Substanzen nicht absichtlich zugesetzt, wobei jedoch mindestens ein Schwermetall aus einer metallischen Oberfläche herausgelöst, zum Beispiel aus einem anderen Bad eingeschleppt werden kann oder/und als Verunreinigung auftreten kann. Vorzugsweise ist die Zusammensetzung arm an, im wesentlichen frei von oder gänzlich frei von Bromid, Chlorid und Jodid, da diese unter Umständen zur Korrosion beitragen können.

Die Schichtdicke der erfindungsgemäß hergestellten Beschichtungen liegt vorzugsweise im Bereich von 0,005 bis 0,3 µm, besonders bevorzugt im Bereich von 0,01 bis 0,25 µm, ganz besonders bevorzugt im Bereich von 0,02 bis 0,2 µm, vielfach bei etwa 0,04 µm, bei etwa 0,06 µm, bei etwa 0,08 µm, bei etwa 0,1 µm, bei etwa 0,12 µm, bei etwa 0,14 µm, bei etwa 0,16 µm oder bei etwa 0,18 µm. Die organisches Monomer, Oligomer, Polymer, Copolymer oder/und Blockcopolymer enthaltenden Beschichtungen sind häufig etwas dicker als solche, die hiervon frei oder fast frei sind.

Vorzugsweise wird mit der Zusammensetzung eine Beschichtung mit einem Schichtgewicht ausgebildet, das bezogen nur auf den Gehalt an Titan oder/und Zirkonium im Bereich von 1 bis 200 mg/m² liegt berechnet als elementares Titan. Besonders bevorzugt liegt dieses Schichtgewicht im Bereich von 5 bis 150 mg/m², ganz besonders bevorzugt im Bereich von 8 bis 120 mg/m², insbesondere bei etwa 10, etwa 20, etwa 30, etwa 40, etwa 50, etwa 60, etwa 70, etwa 80, etwa 90, etwa 100 oder etwa 110 mg/m².

Vorzugsweise wird mit der Zusammensetzung eine Beschichtung mit einem Schichtgewicht ausgebildet, das bezogen nur auf Siloxane/Polysiloxane im Bereich von 0,2 bis 1000 mg/m² liegt berechnet als das entsprechende weitgehend durchkondensierte Polysiloxan. Besonders bevorzugt liegt dieses Schichtgewicht im Bereich von 2 bis 200 mg/m², ganz besonders bevorzugt im Bereich von 5 bis 150 mg/m², insbesondere bei etwa 10, etwa 20, etwa 30, etwa 40, etwa 50, etwa 60, etwa bei 70, etwa 80, etwa 90, etwa 100, etwa 110, etwa bei 120, etwa 130 oder etwa 140 mg/m².

Die mit der wässerigen Zusammensetzung hergestellte Beschichtung kann bei Bedarf anschließend mit mindestens einem Primer, Lack, Klebstoff oder/und mit einer lackähnlichen organischen Zusammensetzung beschichtet werden, wobei gegebenenfalls mindestens eine dieser weiteren Beschichtungen durch Erwärmen oder/und Bestrahlen gehärtet wird.

Die nach dem erfindungsgemäßen Verfahren beschichteten metallischen Substrate können verwendet werden in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen.

Ein Zusatz von Mangan hat sich überraschend als besonders vorteilhaft erwiesen: Obwohl offenbar keine oder fast keine Manganverbindung auf der metallischen Oberfläche abgeschieden wird, fördert der Zusatz die Abscheidung von Silan/Silanol/Siloxan/Polysiloxan auf der metallischen Oberfläche stark. Bei einem Zusatz von Nitroguanidin wurde überraschend festgestellt, dass die Optik der beschichteten Bleche sehr gleichmäßig ist, insbesondere auch auf sensiblen Oberflächen wie sandgestrahlten Eisen- bzw. Stahloberflächen. Ein Zusatz von Nitrit hat die Anrosteignung von Stahl-Substraten unerwartet deutlich verringert. Erstaunlicherweise wurde gefunden, dass jeder Zusatz mit einer signifikanten positiven Wirkung, der in dieser Anmeldung genannt wird, eine additive Wirkung zur Verbesserung der erfindungsgemäßen Beschichtung hat: Durch Auswahl mehrerer Zusätze ähnlich wie bei einem Baukastensystem lassen sich die verschiedenen Eigenschaften insbesondere eines Multimetallsystems weiter optimieren.

Es wurde jetzt überraschend festgestellt, dass eine gute Multimetall-Behandlung mit einer einzigen wässerigen Zusammensetzung erst möglich ist, wenn ein Komplexfluorid eingesetzt wurde, und dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Dass eine derart starke Qualitätssteigerung von wässerigen Zusammensetzungen mit einem Gehalt von Silan/Silanol/Siloxan/Polysiloxan möglich ist, war nicht absehbar. Aber auch ausgehend von wässerigen Zusammensetzungen auf Basis von einem Silan und nur einem Komplexfluorid auf Basis von Titan oder von Zirkonium (ausgehend von den Vergleichsbeispielen VB 3a und VB 4a) stellte sich überraschenderweise eine deutliche Steigerung des Qualitätsniveaus bei allen Versuchen heraus.

Es war darüber hinaus erstaunlich, dass sich bei der Prüfung der Lackhaftung sogar auf Stahl Steinschlag-Noten von 1 oder 2 ergaben: Stahl hat sich als das problematischste Material für wässerige Zusammensetzungen auf Basis von einem Silan und nur einem Komplexfluorid auf Basis von Titan oder von Zirkonium, insbesondere bei der Korrosionsbeständigkeit, erwiesen (siehe beispielsweise VB 2).

Bei Aluminium und Aluminium-Legierungen ist der CASS-Test erfahrungsgemäß problematisch, der jedoch auch mit dem erfindungsgemäßen Verfahren deutlich besser als erwartet ausgefallen ist.

### Beispiele und Vergleichsbeispiele:

Die im Folgenden beschriebenen erfindungsgemäßen Beispiele (B) und die Vergleichsbeispiele (VB) sollen den Gegenstand der Erfindung näher erläutern.

Die wässerigen Badzusammensetzungen werden als Gemische entsprechend Tabelle 1 unter Verwendung von bereits vorhydrolysierten Silanen hergestellt. Sie enthalten jeweils vorwiegend ein Silan und gegebenenfalls auch geringe Gehalte an mindestens einem ähnlichen weiteren Silan, wobei auch hier vereinfachend von Silan und nicht von Silan/Silanol/Siloxan/Polysiloxan gesprochen wird und wobei sich in der Regel diese Vielfalt an Verbindungen, teilweise in größerer Zahl ähnlicher Verbindungen, auch bis in die Ausbildung der Beschichtung hindurchzieht, so dass auch in der Beschichtung oft mehrere ähnliche Verbindungen vorliegen. Das Vorhydrolysieren kann je nach Silan auch über mehrere Tage bei Raumtemperatur unter kräftigem Rühren andauern, soweit die einzusetzenden Silane nicht bereits vorhydrolysiert vorliegen. Zum Vorhydrolysieren des Silans wird das Silan in Wasser im Überschuss gegeben und gegebenenfalls mit Essigsäure katalysiert. Allein wegen des Einstellens des pH-Wertes wurde Essigsäure nur bei einzelnen Ausführungsvarianten zugesetzt. In einigen Ausführungsvarianten ist Essigsäure als Katalysator für die Hydrolyse bereits enthalten. Ethanol entsteht bei der Hydrolyse, wird aber nicht zugesetzt. Das fertige Gemisch wird frisch eingesetzt.

Dann werden jeweils pro Versuch mindestens 3 zuvor mit einem wässerigen alkalischen Reiniger gereinigte und mit Brauchwasser sowie danach mit VE-Wasser gespülte Bleche aus kaltgewalztem Stahl (CRS), Aluminiumlegierung AI6016 bzw. aus beidseitig feuerverzinktem oder elektrolytisch verzinktem Stahl bzw. aus Galvaneal^{®} (ZnFe-Schicht auf Stahl) mit der entsprechenden Vorbehandlungsflüssigkeit der Tabelle 1 beidseitig bei 25 °C durch Spritzen, Tauchen oder Rollcoater-Behandlung in Kontakt gebracht. Dann wurden die derart behandelten Bleche bei 90 °C PMT getrocknet und anschließend mit einem kathodischen Automobil-Tauchlack (KTL) lackiert. Danach wurden diese Bleche mit einem vollständigen, kommerziell genutzten Automobillackaufbau (Füller, Decklack, Klarlack; insgesamt einschließlich KTL ca. 105 µm Dicke des Schichtenpakets) versehen und auf ihren Korrosionsschutz und ihre Lackhaftung geprüft. Die Zusammensetzungen und Eigenschaften der Behandlungsbäder sowie die Eigenschaften der Beschichtungen werden in Tabelle 1 zusammengefasst.

Das organofunktionelle Silan A ist ein Amino-funktionelles Trialkoxysilan und hat eine Aminogruppe pro Molekül. Es liegt wie alle hierbei eingesetzten Silane in der wässerigen Lösung weitgehend oder in etwa vollständig hydrolysiert vor. Das organofunktionelle Silan B hat jeweils eine endständige Aminogruppe sowie jeweils eine Ureidogruppe pro Molekül. Das nichtfunktionelle Silan C ist ein Bis-trialkoxysilan; das entsprechende hydrolysierte Molekül weist an zwei Siliciumatomen bis zu 6 OH-Gruppen auf. Das Polysiloxan D weist ein relativ kurzkettiges Molekül mit einer endständigen OH-Gruppe auf. Es wirkt sich auf die Beschichtung hydrophobierend aus.

Die Komplexfluoride von Aluminium, Silicium, Titan bzw. Zirkonium werden weitgehend auf der Basis eines MeF₆-Komplexes eingesetzt, die Komplexfluoride von Bor jedoch weitgehend auf der Basis eines MeF₄-Komplexes. Mangan wird als metallisches Mangan der jeweiligen Komplexfluoridlösung zugesetzt und darin gelöst. Diese Lösung wird der wässerigen Zusammensetzung beigemischt. Falls kein Komplexfluorid verwendet wird, wird Mangannitrat zugesetzt. Kupfer wird als Kupfer-II-nitrat und Magnesium als Magnesiumnitrat zugesetzt. Eisen und Zink werden als die entsprechenden Nitrate beigemischt. Nitrat allein wird vorzugsweise als Natriumnitrat oder Salpetersäure zugesetzt. Das Epoxy-Polymer A hat einen Gehalt an OH⁻- und an Isocyanat-Gruppen und ist daher nachträglich bei Temperaturen über 100 °C chemisch vernetzbar. Das Epoxy-Polymer B hat auch einen Gehalt an OH⁻- und an Isocyanat-Gruppen und ist daher ebenfalls nachträglich bei Temperaturen über 100 °C chemisch vernetzbar. Das Polymer B ist im Bad bei den gewählten Zusammensetzungen stabiler als das Polymer A. Das silylierte Epoxy-Polymer C hat einen geringen Gehalt an OH⁻- und an Isocyanat-Gruppen und ist daher auch nachträglich bei Temperaturen über 100 °C chemisch vernetzbar.

Die in der wässerigen Zusammensetzung - Konzentrat oder/und Bad - enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls auch beim Härten der Beschichtung, insbesondere bei Temperaturen über 70 °C. Alle Konzentrate und Bäder erwiesen sich über eine Woche stabil und ohne Veränderungen und ohne Ausfällungen. Es wurde kein Ethanol zugesetzt. Gehalte an Ethanol in den Zusammensetzungen rührten nur aus chemischen Reaktionen.

Der pH-Wert wird bei den meisten Beispielen und Vergleichsbeispielen eingestellt, bei Anwesenheit von mindestens einem Komplexfluorid mit Ammoniak, in anderen Fällen mit einer Säure. Alle Bäder zeigen eine gute Qualität der Lösung und fast immer eine gute Badstabilität. Es gibt keine Ausfällungen in den Bädern. Nach dem Beschichten mit der Silan-haltigen Lösung wird zuerst mit VE-Wasser einmal kurz gespült. Danach werden die beschichteten Bleche bei 120 °C im Trockenschrank über 5 Minuten getrocknet. Die visuelle Prüfung der Beschichtungen kann nur bei den Beschichtungen auf Stahl aufgrund der Interferenzfarben signifikant durchgeführt werden und lässt die Gleichmäßigkeit der Beschichtung beurteilen. Die Beschichtungen ohne jeden Komplexfluoridgehalt sind recht ungleichmäßig. Eine Beschichtung mit Titan- und mit Zirkon-Komplexfluorid hat sich überraschend als deutlich gleichmäßiger erwiesen als wenn nur eines dieser Komplexfluoride appliziert worden wäre. Ein Zusatz von Nitroguanidin, Nitrat oder Nitrit verbessert ebenfalls die Gleichmäßigkeit der Beschichtung. Teilweise erhöht sich die Schichtdicke mit der Konzentration dieser Substanzen.

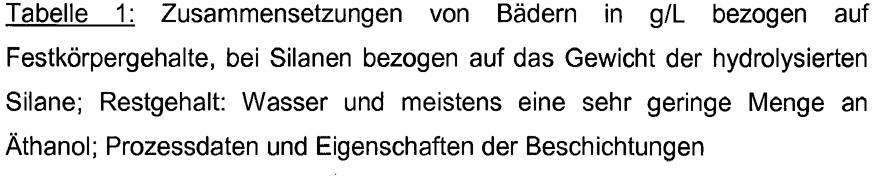

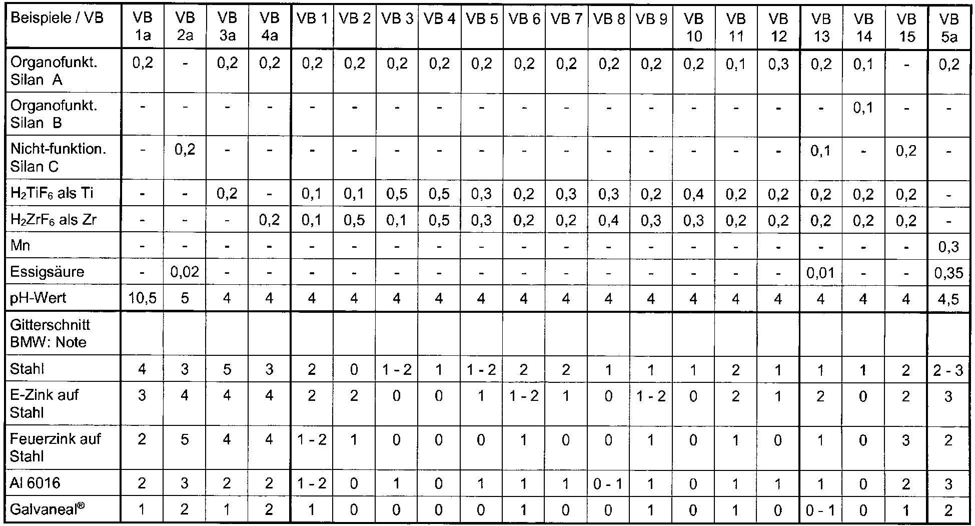

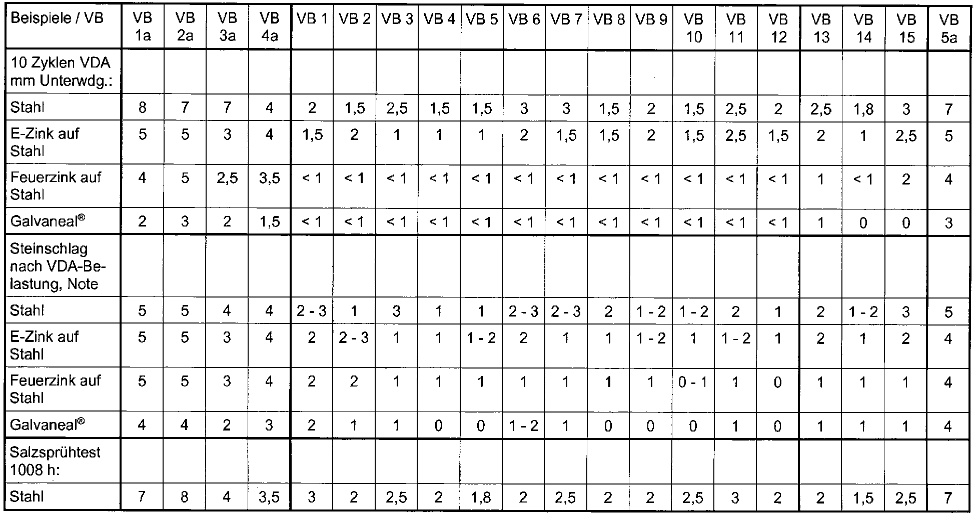

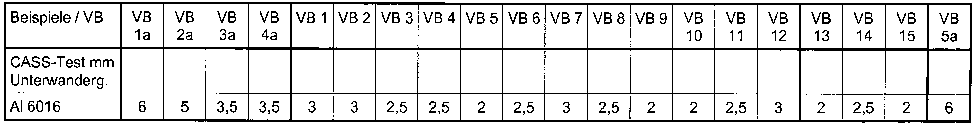

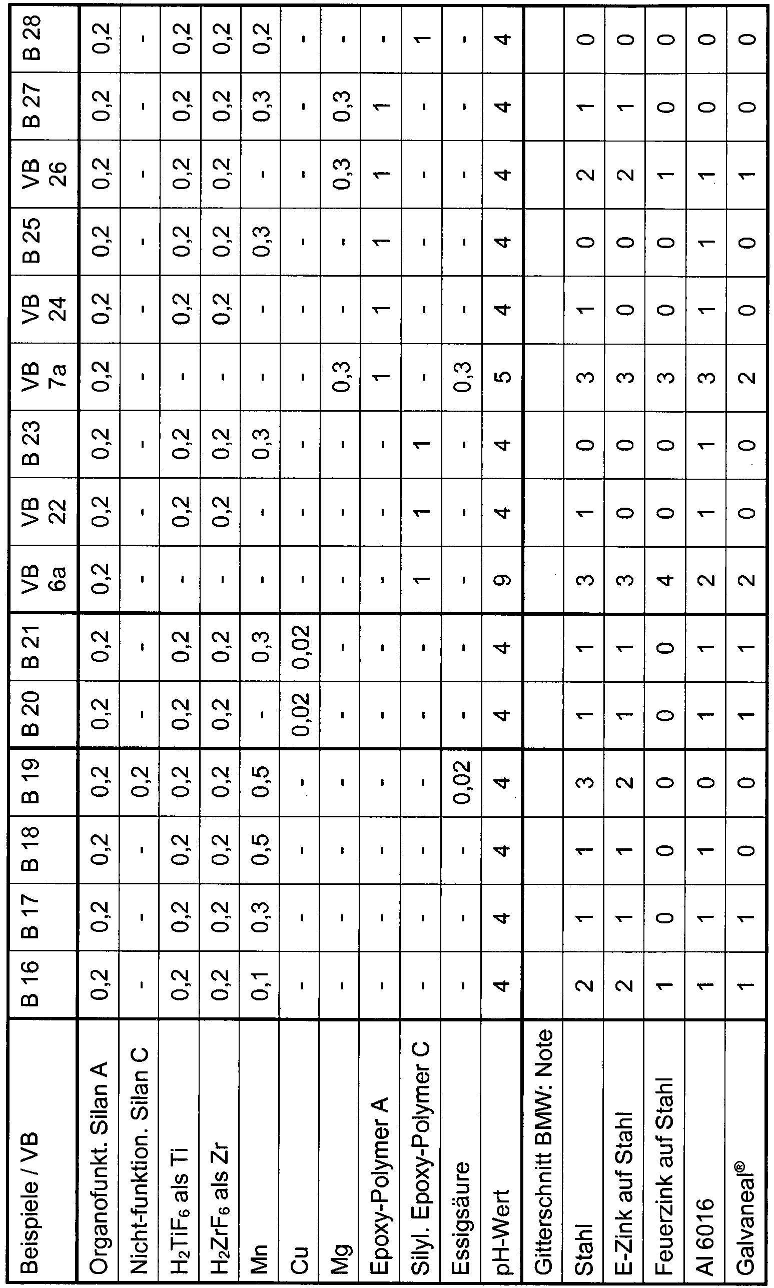

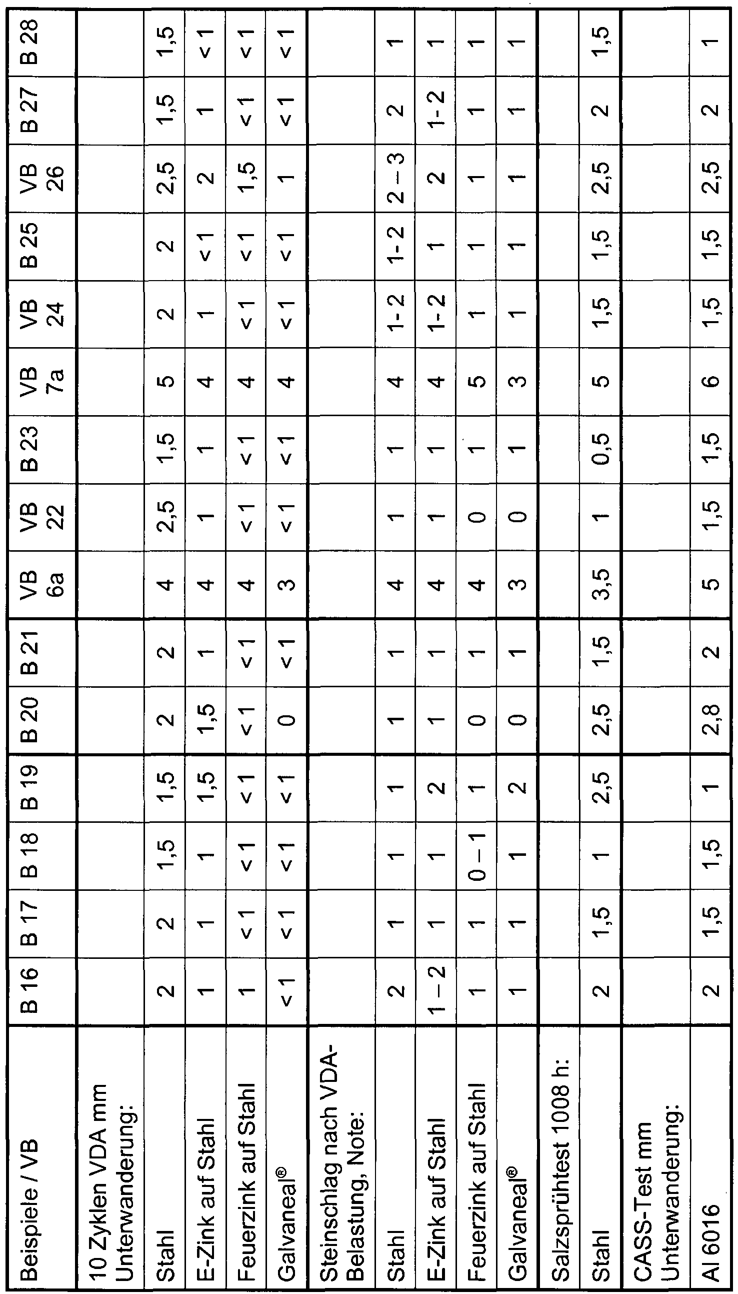

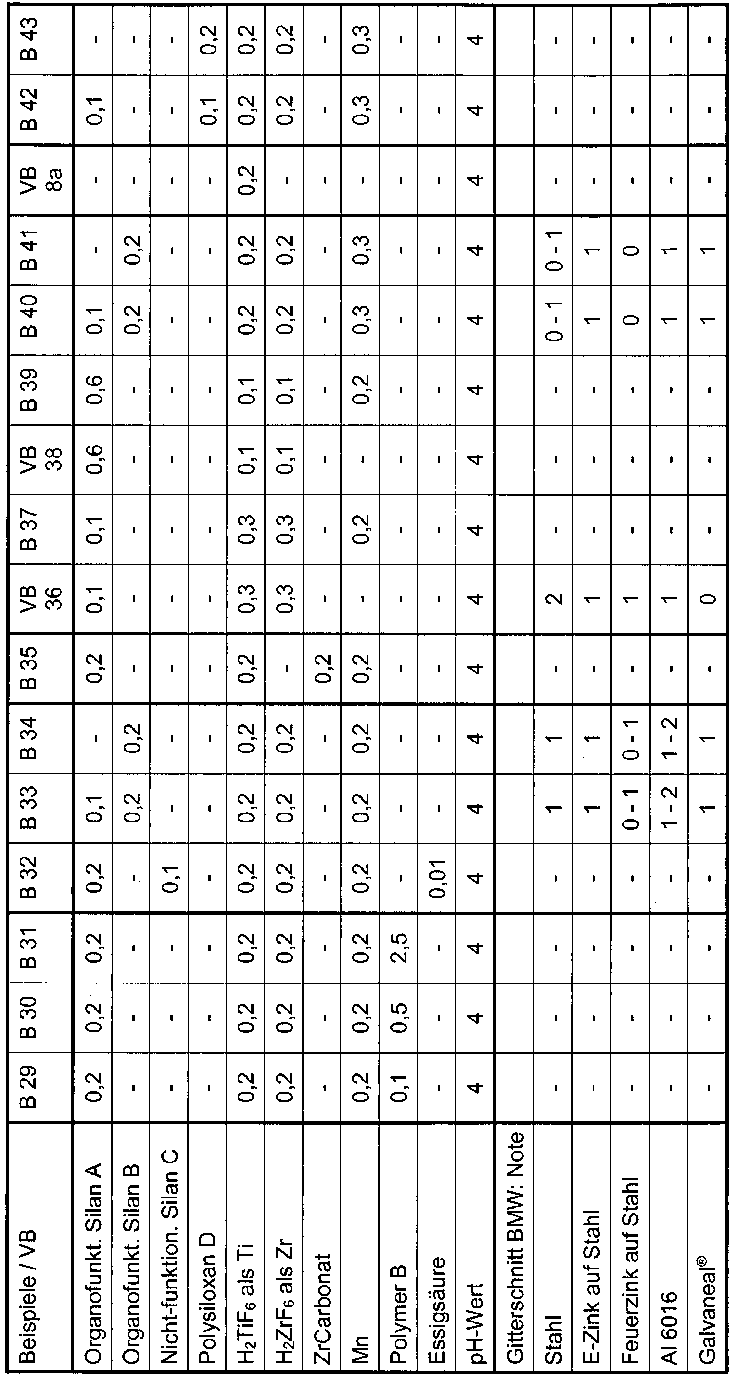

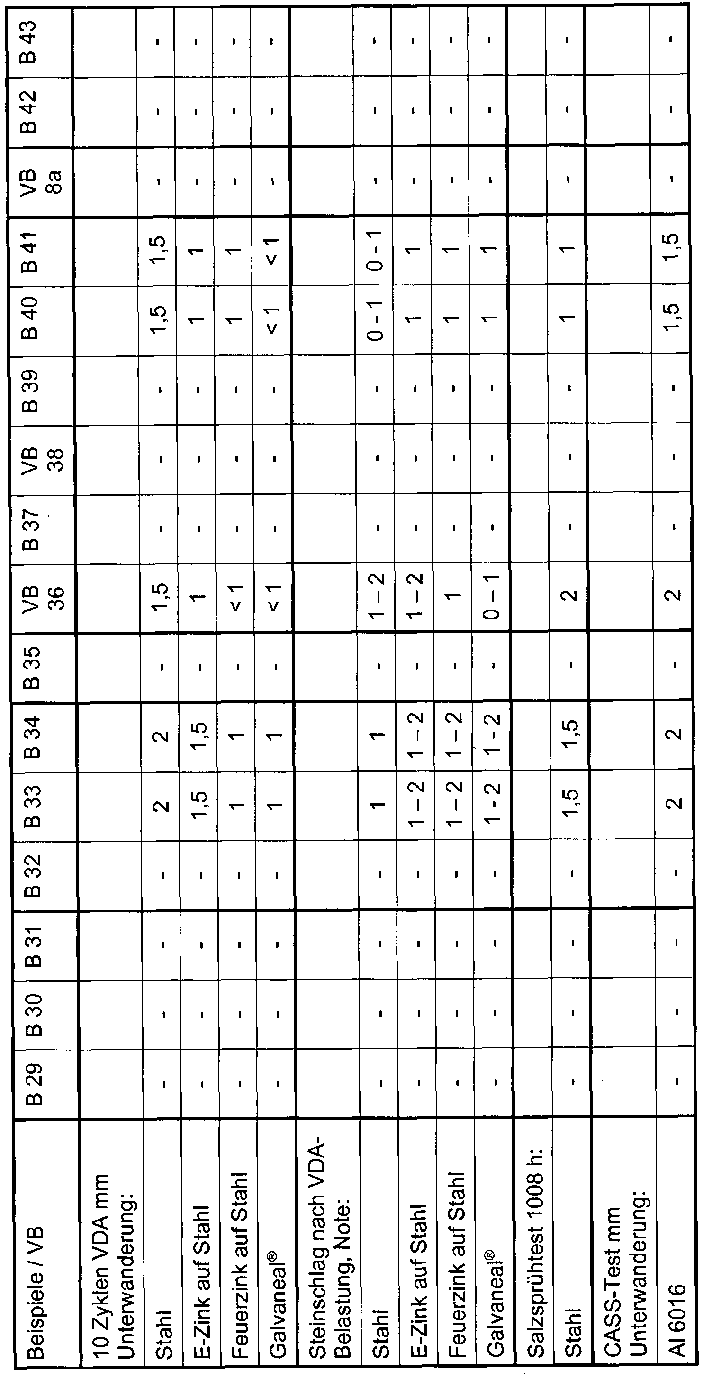

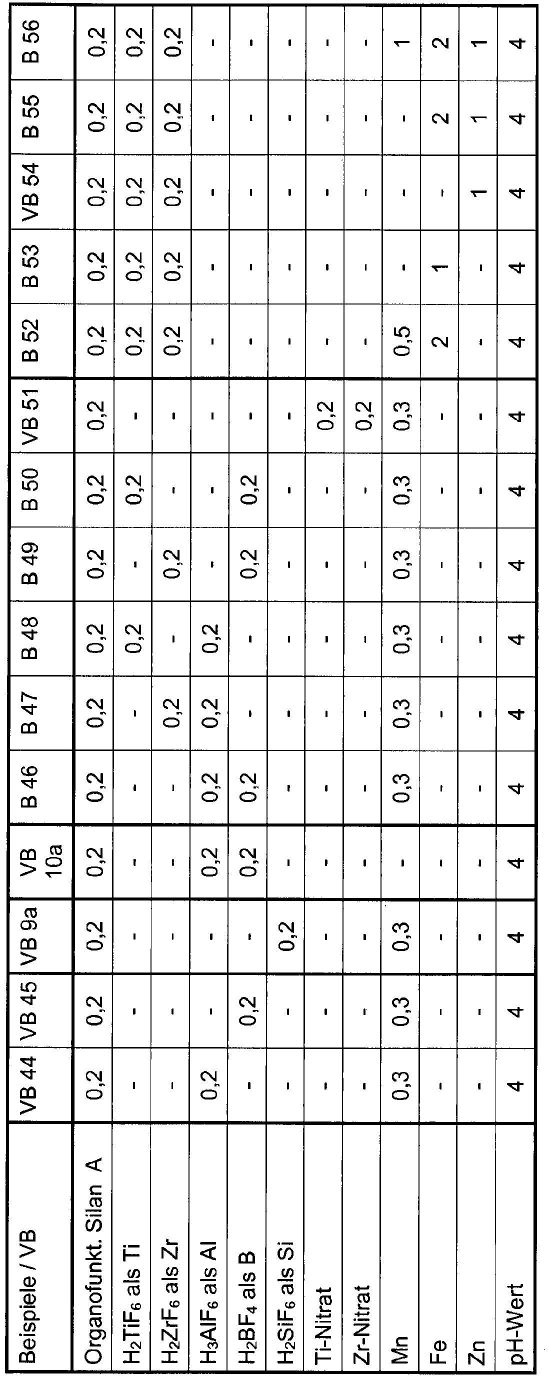

Die Badzusammensetzungen zeigen sich alle in der kurzen Einsatzzeit als stabil und gut applizierbar. Es gibt keine Ausfällungen und keine farblichen Veränderungen. Es gibt keine Unterschiede im Verhalten, im visuellen Eindruck und bei den Testergebnissen zwischen den verschiedenen Beispielen und Vergleichsbeispielen, die auf die Behandlungsbedingungen wie z.B. Applikation durch Spritzen, Tauchen oder Rollcoater-Behandlung zurückgeführt werden können. Die hierbei entstandenen Filme sind transparent und fast alle weitgehend gleichmäßig. Sie zeigen keine Einfärbung der Beschichtung. Die Struktur, der Glanz und die Farbe der metallischen Oberfläche erscheinen durch die Beschichtung nur wenig verändert. Bei einem Gehalt an Titan- oder/und Zirkoniumkomplexfluorid entstehen insbesondere auf Stahloberflächen irisierende Schichten. Die Kombination von mehreren Silanen hat bisher keine signifikante Verbesserung des Korrosionsschutzes ergeben, kann jedoch nicht ausgeschlossen werden. Darüber hinaus wurde auf Aluminium-reichen metallischen Oberflächen ein Gehalt an H₃AlF₆ ermittelt aufgrund entsprechender Reaktionen in der wässerigen Zusammensetzung. Die Kombination von zwei oder drei Komplexfluoriden in der wässerigen Zusammensetzung hat sich jedoch überraschend außerordentlich bewährt.

Die Schichtdicke der derart hergestellten Beschichtungen lag - auch von der Art des Auftrags abhängig, der anfangs in gesonderten Versuchen variiert wurde - im Bereich von 0,01 bis 0,16 µm, meistens im Bereich von 0,02 bis 0,12 µm, oft bei bis zu 0,08 µm, wobei sie deutlich größer war bei Zusatz von organischem Polymer.

Die Korrosionsschutznoten gehen bei der Gitterschnitt-Prüfung gemäß DIN EN ISO 2409 nach Lagerung über 40 Stunden in 5 %iger NaCl-Lösung entsprechend BMW-Spezifikation GS 90011 von 0 bis 5, wobei 0 die besten Werte wiedergibt. Beim Salzsprüh-Kondenswasser-Wechseltest über 10 Zyklen gemäß dem VDA-Prüfblatt 621-415 mit wechselnder Korrosionsbelastung zwischen Salzsprühtest, Schwitzwassertest und Trocknungspause wird die Unterwanderung einseitig vom Ritz aus gemessen und in mm angegeben, wobei die Unterwanderung möglichst klein sein soll. Beim Steinschlag-Test gemäß DIN 55996-1 werden die beschichteten Bleche im Anschluss an den oben genannten VDA-Wechseltest über 10 Zyklen mit Stahlschrot beschossen: Das Schadensbild wird mit Kennwerten von 0 bis 5 charakterisiert, wobei 0 die besten Ergebnisse wiedergibt. Beim Salzsprühtest gemäß DIN 50021 SS werden die beschichteten Bleche bei bis zu 1008 Stunden einer korrosiven Natriumchloridlösung durch Sprühen ausgesetzt; danach wird die Unterwanderung in mm vom Ritz aus gemessen, wobei der Ritz mit einem genormten Stichel bis zur metallischen Oberfläche hergestellt wird und wobei die Unterwanderung möglichst klein sein soll. Beim CASS-Test gemäß DIN 50021 CASS werden die beschichteten, aus einer Aluminium-Legierung bestehenden Bleche über 504 Stunden einer speziellen korrosiven Atmosphäre durch Sprühen ausgesetzt; danach wird die Unterwanderung in mm vom Ritz aus gemessen, die möglichst klein sein soll.

Aufgrund der mehrere Jahrzehnte dauernden Entwicklung der ZinkManganNickel-Phosphatierung von Karosserien sind die derartigen, heute hergestellten Phosphatschichten außerordentlich hochwertig. Dennoch gelang es wider Erwarten auch bei den erst seit wenigen Jahren eingesetzten Silan enthaltenden wässerigen Zusammensetzungen, die gleichen hochwertigen Eigenschaften auch mit den Silan-haltigen Beschichtungen zu erreichen, obwohl hierzu größere Anstrengungen erforderlich waren.

Weitere Versuche an Karosserie-Elementen haben gezeigt, dass gegebenenfalls die elektrochemischen Bedingungen des KTL-Bades geringfügig an die andersartige Beschichtung angepasst werden könnten, aber ansonsten die hervorragenden Eigenschaften, die bei Laborversuchen gewonnen wurden, auch auf Karosserie-Elemente übertragbar sind.

## Patentansprüche

1. Verfahren zur Beschichtung von metallischen Oberflächen mit einer Silan/Silanol/Siloxan/Polysiloxan enthaltenden wässerigen Zusammensetzung, wobei die Zusammensetzung, die einen pH-Wert im Bereich von 3 bis 6 aufweist, besteht aus
a) mindestens einer Verbindung a) ausgewählt aus Silanen, Silanolen, Siloxanen und Polysiloxanen, wobei die Zusammensetzung einen Gehalt an Silan/Silanol/Siloxan/Polysiloxan im Bereich von 0,02 bis 1 g/L enthält, berechnet auf der Basis der entsprechenden Silanole,
b) mindestens zwei Verbindungen b) ausgewählt aus Titan-, Hafnium-, Zirkonium-, Aluminium- oder/und Bor-haltigen Verbindungen, wobei die Zusammensetzung einen Gehalt an Verbindungen b) im Bereich von 0,1 bis 15 g/L aufweist, berechnet als Summe der entsprechenden Metalle, wobei die Zusammensetzung mindestens zwei Komplexfluoride ausgewählt aus Komplexfluoriden von Aluminium, Bor, Titan, Hafnium und Zirkonium enthält,
c) aus mindestens einer Art Kationen ausgewählt aus Kationen von Cer, Chrom, Eisen, Kalzium, Kobalt, Kupfer, Mangan, Molybdän, Nickel, Niob, Tantal, Yttrium, Zinn und weiteren Lanthaniden oder/und aus mindestens einer entsprechenden Verbindung, wobei die Zusammensetzung einen Gehalt an Kationen oder/und entsprechenden Verbindungen c) im Bereich von 0,01 bis 6 g/L aufweist,
und
f) aus Wasser sowie gegebenenfalls
d) aus mindestens einer organischen Verbindung ausgewählt aus Monomeren, Oligomeren, Polymeren, Copolymeren und Blockcopolymeren, wobei das gewichtsbezogene Verhältnis von Verbindungen a) auf Basis von Silan/Silanol/ Siloxan/Polysiloxan berechnet auf Basis der entsprechenden Silanole zu organischen Verbindungen d) berechnet als Feststoffzusatz in der Zusammensetzung im Bereich von 1 : 0,05 bis 1 : 12 liegt, soweit organische Verbindungen d) zugesetzt sind,
e) aus mindestens einer den pH-Wert beeinflussenden Substanz,
g) aus mindestens einem organischen Lösemittel und/oder
h) bis zu 15 Gew.-% des Gehaltes an Feststoffen und Wirkstoffen der Substanzen a) bis d) und f) aus weiteren Substanzen, bei denen es sich nicht um Verbindungen ausgewählt aus Silanen, Silanolen, Siloxanen und Polysiloxanen, nicht um Verbindungen ausgewählt aus Titan-, Hafnium-, Zirkonium-, Aluminium- oder/und Bor-haltigen Verbindungen, nicht um Kationen ausgewählt aus Kationen von Metallen der 1. bis 3. und 5. bis 8. Nebengruppe einschließlich Lanthaniden sowie der 2. Hauptgruppe des Periodensystems der Elemente oder/und entsprechende Verbindungen, nicht um Wasser, nicht um organische Verbindungen ausgewählt aus Monomeren. Oligomeren, Polymeren, Copolymeren und Blockcopolymeren, nicht um pH-Wert beeinflussende Substanzen und nicht um organische Lösemittel handelt,
und wobei im gleichen Bad ein Mix aus verschiedenen metallischen Werkstoffen beschichtet wird.

2. Verfahren nach Anspruch 1, **dadurch gekennzeichnet, dass** die Zusammensetzung mindestens ein Silan oder/und das entsprechende Silanol/ Siloxan/Polysiloxan mit jeweils mindestens einer Amino-Gruppe, Harnstoff-Gruppe oder/und Ureido-Gruppe enthält.

3. Verfahren nach Anspruch 1, **dadurch gekennzeichnet, dass** die Zusammensetzung Komplexfluoride von Titan und von Zirkonium aufweist.

4. Verfahren nach einem der vorstehenden Ansprüche, **dadurch gekennzeichnet, dass** die Zusammensetzung einen Gehalt an mindestens einer Phosphor- und Sauerstoff-haltigen Verbindung aufweist.

5. Verfahren nach einem der vorstehenden Ansprüche, **dadurch gekennzeichnet, dass** die Zusammensetzung einen Gehalt an mindestens einer Art Anionen ausgewählt aus Carboxylaten oder/und mindestens einer entsprechenden, nicht oder/und nur teilweise dissoziierten Verbindung enthält.

6. Verfahren nach einem der vorstehenden Ansprüche, **dadurch gekennzeichnet, dass** die Zusammensetzung einen Gehalt an Nitrat oder/und Nitrit enthält.

7. Verfahren nach einem der vorstehenden Ansprüche, **dadurch gekennzeichnet, dass** die Zusammensetzung einen Gehalt an mindestens einer Art Kationen ausgewählt aus Alkalimetallionen und Ammoniumionen oder/und mindestens einer entsprechenden Verbindung aufweist.

8. Verfahren nach einem der vorstehenden Ansprüche, **dadurch gekennzeichnet, dass** die Zusammensetzung einen Gehalt an freiem Fluorid im Bereich von 0,001 bis 3 g/L aufweist, berechnet als F⁻.

9. Verfahren nach einem der vorstehenden Ansprüche, **dadurch gekennzeichnet, dass** die Zusammensetzung einen Gehalt an mindestens einer Fluorid-haltigen Verbindung oder/und an Fluorid-Anionen enthält.

10. Verfahren nach einem der vorstehenden Ansprüche, **dadurch gekennzeichnet, dass** mit der wässerigen Beschichtung im gleichen Bad ein Mix aus verschiedenen metallischen Werkstoffen beschichtet wird.

11. Verfahren nach einem der vorstehenden Ansprüche, **dadurch gekennzeichnet, dass** mit der Zusammensetzung eine Beschichtung ausgebildet wird, die ein Schichtgewicht bezogen nur auf Gehalte an Titan oder/und Zirkonium im Bereich von 1 bis 200 mg/m² aufweist berechnet als Titan.

12. Verfahren nach einem der vorstehenden Ansprüche, **dadurch gekennzeichnet, dass** mit der Zusammensetzung eine Beschichtung mit einem Schichtgewicht ausgebildet wird, das bezogen nur auf Siloxane/Polysiloxane im Bereich von 0,2 bis 1000 mg/m² liegt berechnet als das entsprechende weitgehend durchkondensierte Polysiloxan.

13. Verfahren nach einem der vorstehenden Ansprüche, **dadurch gekennzeichnet, dass** die mit einer wässerigen Zusammensetzung hergestellte Beschichtung anschließend mit mindestens einem Primer, Lack, Klebstoff oder/und mit einer lackähnlichen organischen Zusammensetzung beschichtet wird, wobei gegebenenfalls mindestens eine dieser weiteren Beschichtungen durch Erwärmen oder/und Bestrahlen gehärtet wird.

## Claims

1. A process for coating metallic surfaces with an aqueous composition containing silane/silanol/siloxane/ polysiloxane, wherein the composition having a pH ranging from 3 to 6 consists of
a) at least one compound a) selected from silanes, silanols, siloxanes and polysiloxanes, the content of silane/silanol/siloxane/polysiloxane in the composition ranging from 0.02 to 1 g/l, calculated on the basis of the corresponding silanols,
b) at least two compounds b) selected from compounds containing titanium, hafnium, zirconium, aluminum and/or boron, the content of compounds b) in the composition ranging from 0.1 to 15 g/l, calculated as the sum of the corresponding metals, the composition containing at least two complex fluorides selected from those of aluminum, boron, titanium, hafnium and zirconium,
c) at least one type of cation selected from cations of cerium, chromium, iron, calcium, cobalt, copper, manganese, molybdenum, nickel, niobium, tantalum, yttrium, zinc, tin and other lanthanides, and/or at least one corresponding compound, the content of cations and/or corresponding compounds c) in the composition ranging from 0.01 to 6 g/l, and
f) water and optionally
d) at least one organic compound selected from monomers, oligomers, polymers, copolymers and block copolymers, the weight ratio of compounds a) based on silane/silanol/siloxane/polysiloxane, calculated on the basis of the corresponding silanols, to organic compounds d), calculated as added solids, in the composition ranging from 1:0.05 to 1:12, if organic compounds d) are added, and/or
e) at least one substance that influences the pH,
g) at least one organic solvent and/or
h) up to 15% by weight of the content of solids and active substances among the substances a) to d) and f) of further substances that are not compounds selected from silanes, silanols, siloxanes and polysiloxanes, not compounds selected from compounds containing titanium, hafnium, zirconium, aluminum and/or boron, not cations selected from cations of metals of subgroups 1 to 3 and 5 to 8, including lanthanides, and of main group 2 of the periodic table of the elements, and/or corresponding compounds, not water, not organic compounds selected from monomers, oligomers, polymers, copolymers and block copolymers, not substances that influence the pH and not organic solvents,
and wherein a mix of different metallic materials is coated in the same bath.

2. The process according to claim 1, wherein the composition contains at least one silane and/or the corresponding silanol/siloxane/polysiloxane having at least one amino group, urea group and/or ureido group in each case.

3. The process according to claim 1, wherein the composition has complex fluorides of titanium and zirconium.

4. The process according to one of the preceding claims, wherein the composition contains at least one phosphorus-containing and oxygen-containing compound.

5. The process according to one of the preceding claims, wherein the composition contains at least one type of anion selected from carboxylates, and/or at least one corresponding undissociated and/or only partially dissociated compound.

6. The process according to one of the preceding claims, wherein the composition contains nitrate and/or nitrite.

7. The process according to one of the preceding claims, wherein the composition contains at least one type of cation selected from alkali-metal ions and ammonium ions, and/or at least one corresponding compound.

8. The process according to one of the preceding claims, wherein the composition has a content of free fluoride ranging from 0.001 to 3 g/l, calculated as F⁻.

9. The process according to one of the preceding claims, wherein the composition contains at least one fluoride-containing compound and/or fluoride anions.

10. The process according to one of the preceding claims, wherein a mix of different metallic materials is coated with the aqueous coating in the same bath.

11. The process according to one of the preceding claims, wherein the composition forms a coating with a layer weight which, based only on titanium and/or zirconium contents, ranges from 1 to 200 mg/m², calculated as titanium.

12. The process according to one of the preceding claims, wherein the composition forms a coating with a layer weight which, based only on siloxanes/polysiloxanes, ranges from 0.2 to 1000 mg/m², calculated as the corresponding extensively condensed polysiloxane.

13. The process according to one of the preceding claims, wherein the coating produced with an aqueous composition is then coated with at least one primer, lacquer or adhesive and/or with a lacquer-like organic composition, wherein optionally at least one of these other coatings is cured by heating and/or irradiation.

## Revendications

1. Procédé pour revêtir des surfaces métalliques avec une composition aqueuse contenant un silane/silanol/siloxane/polysiloxane, la composition qui présente une valeur de pH dans la plage de 3 à 6 étant constituée :
a) d'au moins un composé a), choisi parmi les silanes, silanols, siloxanes et polysiloxanes, la composition contenant une teneur en silane/silanol/siloxane/polysiloxane dans la plage de 0,02 à 1 g/L, calculée sur la base des silanols correspondants,
b) d'au moins deux composés b), choisis parmi les composés contenant du titane, du hafnium, du zirconium, de l'aluminium et/ou du bore, la composition présentant une teneur en composés b) dans la plage de 0,1 à 15 g/L, calculée en tant que total des métaux correspondants, la composition contenant au moins deux fluorures complexes choisis parmi les fluorures complexes d'aluminium, de bore, de titane, de hafnium et de zirconium,
c) d'au moins un type de cations choisi parmi les cations de cérium, de chrome, de fer, de calcium, de cobalt, de cuivre, de manganèse, de molybdène, de nickel, de niobium, de tantale, d'yttrium, d'étain et d'autres lanthanides et/ou d'au moins un composé correspondant, la composition présentant une teneur en cations et/ou en composés correspondants c) dans la plage de 0,01 à 6 g/L, et
f) d'eau ainsi qu'éventuellement
d) d'au moins un composé organique, choisi parmi les monomères, oligomères, polymères, copolymères et copolymères à blocs, le rapport en poids de composés a) à base de silane/silanol/siloxane/polysiloxane, calculé sur la base des silanols correspondants, aux composés organiques d), calculé en tant qu'adjuvants solides dans la composition, est situé dans la plage de 1:0,05 à 1:12, dans la mesure où il y a des composés organiques d) ajoutés,
e) d'au moins une substance influençant la valeur du pH,
g) d'au moins un solvant organique et/ou
h) d'une quantité allant jusqu'à 15 % en poids de la teneur en solides et des matières actives des substances a) à d) et f) parmi des substances supplémentaires, qui ne sont pas des composés choisis parmi des silanes, des silanols, des siloxanes et des polysiloxanes, qui ne sont pas des composés choisis parmi des composés contenant du titane, de l'hafnium, du zirconium, de l'aluminium et/ou du bore, qui ne sont pas des cations choisis parmi des cations de métaux des groupes secondaires 1 à 3 et 5 à 8 y compris les lanthanides ainsi que du deuxième groupe principal du système périodique des éléments et/ou des composés correspondants, qui ne sont pas de l'eau, qui ne sont pas des composés organiques choisis parmi des monomères, des oligomères, des polymères, des copolymères et des copolymères à blocs, qui ne sont pas des substances influant la valeur du pH et qui ne sont pas des solvants organiques,
et dans le même bain, un mélange de différents matériaux métalliques étant revêtu.

2. Procédé conforme à la revendication 1, **caractérisé en ce que** la composition contient au moins un silane et/ou le silanol/siloxane/polysiloxane correspondant, dotés chacun d'au moins un groupe amino, urée et/ou uréido.

3. Procédé conforme à la revendication 1, **caractérisé en ce que** la composition comporte des fluorures complexes de titane et de zirconium.

4. Procédé conforme à l'une des revendications précédentes, **caractérisé en ce que** la composition présente une teneur en au moins un composé contenant du phosphore et de l'oxygène.

5. Procédé conforme à l'une des revendications précédentes, **caractérisé en ce que** la composition contient une teneur en au moins un type d'anions, choisi parmi les carboxylates et/ou au moins un composé correspondant, non dissocié et/ou seulement partiellement dissocié.

6. Procédé conforme à l'une des revendications précédentes, **caractérisé en ce que** la composition contient un nitrate et/ou un nitrite.

7. Procédé conforme à l'une des revendications précédentes, **caractérisé en ce que** la composition présente une teneur en au moins un type de cations, choisi parmi les ions de métal alcalin et les ions ammonium et/ou au moins un composé correspondant.

8. Procédé conforme à l'une des revendications précédentes, **caractérisé en ce que** la composition présente une teneur en fluorure libre dans la plage de 0,001 à 3 g/L, calculée en tant que F⁻.

9. Procédé conforme à l'une des revendications précédentes, **caractérisé en ce que** la composition contient une teneur en au moins un composé contenant du fluorure et/ou en anions fluorure.

10. Procédé conforme à l'une des revendications précédentes, **caractérisé en ce qu'**on revêt avec un revêtement aqueux, dans le même bain, un mélange constitué de différents matériaux métalliques.

11. Procédé conforme à l'une des revendications précédentes, **caractérisé en ce qu'**on forme avec la composition un revêtement qui présente un poids surfacique, uniquement par rapport aux teneurs en titane et/ou zirconium, dans la plage de 1 à 200 mg/m², calculé en tant que titane.

12. Procédé conforme à l'une des revendications précédentes, **caractérisé en ce qu'**on forme avec la composition un revêtement avec un poids surfacique qui, uniquement par rapport aux siloxanes et polysiloxanes, est situé dans la plage de 0,2 à 1 000 mg/m², calculé en tant que polysiloxane correspondant pratiquement totalement condensé.

13. Procédé conforme à l'une des revendications précédentes, **caractérisé en ce que** le revêtement préparé avec une composition aqueuse est ensuite recouvert d'au moins un primaire, un adhésif, un vernis et/ou d'une composition organique de type vernis, au moins l'un de ces revêtements supplémentaires étant, le cas échéant, durci par chauffage et/ou exposition à un rayonnement.
